(19) Europäisches Patentamt / European Patent Office / Office européen des brevets

(11) **EP 4 292 822 B1**

(12) **EUROPEAN PATENT SPECIFICATION**

(45) Date of publication and mention
of the grant of the patent:
**15.10.2025 Bulletin 2025/42**

(21) Application number: **22178741.9**

(22) Date of filing: **13.06.2022**

(51) International Patent Classification (IPC):
**C09D 11/40** (2014.01)     **B41J 2/045** (2006.01)
**B41J 2/14** (2006.01)

(52) Cooperative Patent Classification (CPC):
**B41J 2/04581; B41J 2/04541; B41J 2/04588;
B41J 2/14233; C09D 11/40;** B41J 2002/1437;
B41J 2002/14491; B41J 2202/13; B41J 2202/15;
B41J 2202/18

(54) **A MONOLITHIC INKJET PRINTHEAD AND INK COMPOSITIONS**

MONOLITHISCHER TINTENSTRAHLDRUCKKOPF UND TINTENZUSAMMENSETZUNGEN

TÊTE D'IMPRESSION À JET D'ENCRE MONOLITHIQUE ET COMPOSITIONS D'ENCRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.12.2023 Bulletin 2023/51**

(73) Proprietor: **3C Project Management Limited
Co. Wicklow A63HF96 (IE)**

(72) Inventor: **MCAVOY, Gregory John
A63HF96 County Wicklow (IE)**

(74) Representative: **Hindles Limited
Clarence House
131-135 George Street
Edinburgh, EH2 4JS (GB)**

(56) References cited:
**WO-A1-2021/229040     US-A1- 2019 283 424**

**Description**

Field of the invention

The present invention relates to a monolithic inkjet printhead, a set of different ink compositions suitable for use in said printhead, a printing apparatus comprising said printhead, and methods thereof.

Background to the invention

Piezoelectric inkjet (PIJ) printheads are still a field of active research and development. To date, most PIJ printheads incorporate a piezoelectric actuator in a wall of an ink chamber. Deformation of a piezoelectric element causes deflection of the piezoelectric actuator, inducing a pressure change in the ink stored within the chamber and thereby causing ink droplet ejection through a nozzle. To achieve the required print resolution, commercial PIJ printheads usually employ many parallel electrical connections to external actuator drivers to drive individual piezoelectric actuators within the printhead. Large numbers of wires not only increase complexity of the manufacture, but also reduce reliability of the printing itself. Further, multi-colour printing may require different operational inputs (e.g. different actuation waveforms) and/or different nozzles to eject different inks, both adding complication to the printhead with respect to its operation and configuration.

The known art in this field suffers from one or more problems as described above.

US 2011/0134175A1 describes a method of adjusting ink ejection characteristics of an inkjet printing apparatus which include adjusting at least one of a voltage and an application duration of a driving signal applied to a plurality of piezoelectric actuators that provide ejection pressures to a plurality of nozzles so that volumes of a plurality of ink droplets ejected from the plurality of nozzles are uniform, and displacing an application starting time of the driving signal applied to the plurality of piezoelectric actuators so that the plurality of ink droplets ejected from the plurality of nozzles reach a printing medium at a same time.

US 6328395B1 describes a drive signal generating means that generates a drive signal including a plural number of drive pulses during one period. Print date generating means generates print data to input one or a plural number of the drive pulses to each pressure generating element during one print period. The pressure generating means expands and contracts in accordance with the drive pulses input thereto, to thereby cause the ejection of an ink droplet or droplets.

US 6364444B1 describes an apparatus for driving an inkjet recording head which includes a piezoelectric device, a drive waveform generation circuit and a waveform extraction circuit. The drive waveform generation circuit generates a drive waveform in which n basic waveforms are connected in series, each of the n basic waveforms having a single period. The waveform extraction circuit which extracts m of the n basic waveforms as a print drive waveform based on externally supplied print data and applies the print drive waveform to the piezoelectric device. Thereby, an ink is discharged from a nozzle based on a distortion of the piezoelectric device.

In view of the deficiencies of the prior art, the present invention aims to provide an improved inkjet printhead and printing apparatus that can reliably deliver fine and accurate printing. Embodiments of the invention seek to provide an inkjet printhead with simple manufacture, simple operation, and compact configuration. The printhead according to the present invention is for ejecting a set of different ink compositions, for example a set of ink compositions of different colours.

According to the present invention, a set of different ink compositions are employed which, although different, have properties which are controlled such that they can be ejected by corresponding droplet ejectors. Desirably, during use, the ink compositions are ejected by substantially the same actuation waveform, and the resultant droplets on a printing medium (e.g. a piece of paper) may have the same size and shape so as to provide high quality printing, while minimising wiring complexity. The present invention further aims to provide a printing apparatus that include said inkjet printhead and said ink compositions. In this way, the apparatus provides all the advantages of the printhead and the ink compositions.

WO 2021/229040A1 describes a droplet ejector assembly for a printhead comprises a substrate, the substrate comprising a CMOS control circuit, a plurality of layers on the first surface of the substrate, a fluid chamber having a droplet ejection outlet, and a piezoelectric actuator element formed by one or more said layers and comprising first and second electrodes in contact with a piezoelectric body.

US 2019/0283424A1 describes a droplet ejector for a printhead, the droplet ejector comprising a substrate having a mounting surface and an opposite nozzle surface; at least one electronic component integrated with the substrate; a nozzle-forming layer formed on at least a portion of the nozzle surface of the substrate; a fluid chamber defined at least in part by the substrate and at least in part by the nozzle-forming layer, the fluid chamber having a fluid chamber outlet defined at least in part by a nozzle portion of the said nozzle-forming layer; a piezoelectric actuator formed on at least a portion of the nozzle portion of the nozzle-forming layer; and a protective layer covering the piezoelectric actuator and in the nozzle forming layer.

Summary of the invention

The invention is set out in the appended set of claims.

In a first aspect, there is provided a monolithic inkjet printhead for ejecting a set of different ink compositions, wherein the printhead comprises a substrate, the substrate comprising a plurality of ejectors each comprising: (i) a nozzle, (ii) a chamber for receiving an ink composition of the set and each said chamber in fluid communication with said nozzle, and (iii) a piezoelectric actuator coupled to said nozzle for selectively ejecting said ink composition therefrom.

Each ejector is configured to eject ink droplets of the different ink compositions with corresponding volume and velocity.

Typically, each ejector is configured to eject ink compositions which meet a plurality of physical property criteria with corresponding volume and velocity, the physical property criteria including at least corresponding density and viscosity. The physical property criteria typically also include corresponding surface tension. Typically, corresponding compressibility is not required.

By corresponding viscosity, we refer to the viscosity of the ink compositions of the composition being the same or similar (e.g. at 25°C and 1 atmosphere pressure). For example, the viscosity values of said compositions may be such that the difference between any two compositions is not more than 20% of the largest viscosity value of the set, preferably not more than 10%, more preferably not more than 5%, and most preferably not more than 1%.

By corresponding density, we refer to the densities of the ink compositions being the same or similar (e.g. at 25°C and 1 atmosphere pressure). For example, it may be that the difference in the density between any two compositions is not more than 20% of the largest density value of the set, preferably not more than 10%, more preferably not more than 5% and most preferably not more than 1%.

By corresponding surface tension, we refer to the surface tension of the ink compositions being the same or similar (e.g. at 25°C and 1 atmosphere pressure). For example, it may be that the surface tension values of said compositions are such that the difference between any two compositions is not more than 20% of the largest surface tension value of the set, preferably not more than 10%, more preferably not more than 5%, and most preferably not more than 1%.

It will be understood that all possible combinations of the ranges of the viscosity, density, surface tension and the preferred ranges of the viscosity, density, surface tension are also contemplated. The differences in viscosity, density and surface tension between any two compositions are not more than 5% of the largest corresponding value of the set. It may be that the difference in viscosity between any two compositions is not more than 5% of the largest viscosity of the set, the difference in density between any two compositions is not more than 5% or 1% of the largest density of the set, and the difference in surface tension between any two compositions is not more than 5% of the largest surface tension of the set. It may also be that the difference in viscosity between any two compositions is not more than 1% of the largest viscosity of the set, the difference in density between any two compositions is not more than 1% of the largest density of the set, and optionally the difference in surface tension between any two compositions is not more than 1% of the largest surface tension of the set.

Typically, the configuration of the ejector comprises the dimensions of the nozzle and the chamber of the ejector.

Typically, the configuration of the ejector comprises the actuation waveform of the actuator in use. The actuation waveform typically comprises the time-varying displacement of and the force applied to ink composition in the chamber during actuation.

Typically, all the nozzles and actuators have corresponding dimensions and materials such that the ejected ink droplets of the ink compositions have corresponding volume and velocity.

Typically, the substrate has a first surface and an opposite second surface, the substrate comprises a CMOS control circuit, a plurality of layers on the first surface of the substrate, the piezoelectric actuator being formed by one or more said layers and the nozzle comprising a hole through the one or more said layers, such that the piezoelectric actuator displaces the one or more said layers and the nozzle in use to thereby eject ink composition. Thus, the ejectors are typically configured to eject ink composition in an inertial mode. It may be that the hole extends through the piezoelectric actuator.

The ejected ink droplets of the different compositions have corresponding volume and velocity. Said volume and velocity can be evaluated by known and effective methods, such as a printed test pattern. Various 'printed test pattern' methods have been described by prior art, for example, US 2011/227988A1, US 8322814B2, US 10589519B2 and US 7855037B2. The printed test pattern can be in the form of a printer's testing page (e.g. a coloured printer testing page), or any suitable form configured to permit evaluation of correspondence. The method can be optionally repeated once or multiple times (e.g. when adjustments are needed and the correspondence of volume and velocity should be evaluated again). In other words, the printed test pattern can be produced multiple times. The printed test pattern may comprise features such as one or more symbols (e.g. squares, dots, diamonds), numbers, letters, fiducials, cross hairs, lines, grids, and mixtures thereof. The positioning(s) of those features can be evaluated (e.g. by users or machines or software or other suitable technologies) to determine the satisfaction of correspondence, since positioning is a function of droplet volume and velocity.

By corresponding volume, we refer to having the same or similar volume (e.g. at 25°C and 1 atmosphere pressure). Suitably, the ejected ink droplets have corresponding volume such that the difference of volume of any two droplets from different ink compositions is not more than 1 picoliters, or not more than 0.5 picoliters, or not more than 0.2 picoliters, or not more than 0.1 picoliters, or not more than 0.05 picoliters, or not more than 0.01 picoliters, or zero. Additionally or alternatively, the difference of volume of any two droplets from different ink compositions is not more than 20% with respect to the larger volume of the two droplets, or not more than 10%, or not more than 5%, or not more than 1%, or zero.

By corresponding velocity, we refer to having the same or similar velocity (e.g. at 25°C and 1 atmosphere pressure). Suitably, the ejected ink droplets have corresponding velocity such that the difference of velocity of any two droplets from different ink compositions is not more than 2m/s, or not more than 1m/s, or not more than 0.2m/s, or not more than 0.1m/s, or not more than 0.05m/s, or zero. Additionally or alternatively, the difference of velocity of any two droplets from different ink compositions is not more than 20% with respect to the larger velocity of the two droplets, or not more than 10%, or not more than 10%, or not more than 5%, or not more than 1%, or zero. Herein, it will be understood that all possible combinations of the sub-ranges of the volume and velocity are also contemplated. For instance, the difference of volume may not be more than 10% and the difference of velocity may not be more than 10% or 5%, as described above. For instance, the difference of volume may not be more than 5% and the difference of velocity may not be more than 5% or 1%, as described above. For instance, the difference of volume may not be more than 0.5 picoliters, and the difference of velocity may not be more than 1m/s or 0.2m/s, as described above. For instance, the difference of volume may not be more than 0.2 picoliters, and the difference of velocity may not be more than 0.2m/s or 0.1m/s, as described above.

In the context of the present invention, a printhead is a component for use in a printing apparatus. In the present invention, monolithic means all the component parts of the printhead are integrated to form a single unit. This can be achieved by large-scale manufacturing of multiple ejectors on a single substrate (e.g. from a single substrate wafer) or by manufacturing multiple ejectors on each of a plurality of substrates and joining these together.

It may be that the printhead comprises at least 100 ejectors, preferably at least 1000 ejectors. It may be that the printhead is for ejecting a single ink composition from the plurality of nozzles.

Typically, the printhead comprises a plurality of groups (typically at least four groups) of ejectors, each group of ejectors for ejecting an ink composition, at least two (and typically at least four) of the ink compositions being different from each other. In this way, the exemplar printhead can be used to eject a plurality (typically at least four) different ink compositions. The groups are typically known in the art as channels. Typically, the printhead comprises a separate manifold for each group of ejectors, to supply an ink composition from a respective ink store to each ejector of the respective group of ejectors.

It will be understood that each ink chamber is in fluid communication with a supply of the respective ink composition to the respective nozzle. Thus, the chamber not only receives and stores the ink composition but is in fluid communication with the nozzle for the composition to be ejected therefrom.

It will be understood that the nozzle comprises an opening through which the ink composition can be controllably ejected by operation of a piezoelectric actuator. Typically, the nozzle has a cross-sectional area of less than 3 mm$^2$, for example less than 0.3mm$^2$. The piezoelectric actuator typically operates to cause displacement of a resiliently deformable membrane defining at least a portion of the nozzle in such a way as to cause ejection of the ink composition from said nozzle on operation of said actuator.

According to the present invention, the piezoelectric actuator is coupled to the respective nozzle. Thus, deformation of the piezoelectric actuator during use leads to movement of the nozzle. Typically, the droplet ejector comprises a resiliently deformable membrane that comprises the piezoelectric actuator and defines at least a portion of the nozzle (or defining the nozzle). Thus, the resilient deformable membrane defines at least part (e.g. a wall of) the chamber. Typically, the actuator is disposed adjacent to, for example around, the nozzle. Typically, actuation of the piezoelectric actuator deflects the resiliently deformable membrane, which defines the nozzle. Thus, the resiliently deformable membrane and nozzle move in use to eject ink composition from within the chamber out through the nozzle. Typically, the printhead comprises a nozzle-defining layer formed on the substrate, the nozzle-defining layer comprising the piezoelectric actuator and defining the nozzle. The nozzle-defining layer typically comprises at least one piezoelectric layer and one or more electrodes in electrical contact with the at least one piezoelectric layer.

This contrasts with arrangements where the actuator is in distal association with the nozzle, and/or where the nozzle and actuator are on different walls of the chamber (e.g the nozzle is on one wall of the fluid chamber, and the actuator is on the opposing wall of the same chamber such that the actuator is far away from the nozzle). Existing PIJ technologies where the actuator is not coupled to the nozzle/is away from the nozzle require a large actuation force to compress almost the entire ink composition stored in the chamber in order to eject said ink composition. This operation thus depends upon compressibility mode. By contrast, the present arrangement avoids disturbing the majority of the ink in the chamber, and only requires a small actuation force to displace the ink in the nozzle. The ink is then ejected mainly by inertial force (i.e. inertial ejection) from the nozzle. Herein, ejection by inertial force can also be referred to as inertial ejection or ejection by inertial mode. In the context of the present invention, since the actuator is coupled to the respective nozzle, the invention permits ejection of the ink (from the respective nozzle) by inertial mode other than by compressibility mode. Thus, the actuator of the present invention is suitably configured to eject ink composition (from the respective nozzle) by inertial mode (i.e. inertial ejection).

Ejection by inertial mode (i.e. inertial ejection) has a number of closely associated benefits. It permits the use of low-temperature processable piezoelectric materials having lower piezoelectric constants (i.e. piezoelectric materials which are processable below 450 degC or below 300 degC) since only a small actuation force is initially required. The small force exerted by a piezoelectric actuator comprising low-temperature processable piezoelectric materials gives relatively low fluid pressure such that an acoustic cross talk problem (i.e. neighbouring actuators and fluid chambers interact with one another through pressure waves in the fluid.) is mitigated. Lower levels of acoustic cross talk in turn permit close integration of neighbouring ejectors for a compact configuration of the printhead.

To obtain a high-quality printing, the ejected ink droplets need to have corresponding volume and velocity. In this way, the deposited droplets on a printing medium (e.g. a paper) may give corresponding shape and volume. For inertial ejection, it is found that satisfactory correspondence may be achieved by matching the frequency of an actuation waveform sent to an actuator to the resonant frequency (e.g. the in-use resonant frequency) of the respective nozzle. Thus, the complexity of inertial ejection can be directly related to the number of separate waveforms required to drive the nozzles, especially nozzles ejecting different ink compositions. For simplicity, it is typical if all the nozzles require the same or similar waveforms during actuation(i.e. waveforms with the same or similar frequency, typically with the same frequency). This can be achieved if all nozzles have the same or similar resonant frequency (e.g. same or similar resonant frequency during use). The difference of (e.g., in-use) resonant frequency of any two nozzles may be not more than 10 kHz, or not more than 1 kHz, or not more than 100Hz, or not more than 10 Hz, or not more than 1 Hz, or zero Hz. The difference of (e.g. in-use) resonant frequency of any two nozzles may be not more than 10% with respect to the larger resonant frequency of the two nozzles, or not more than 5%, or not more than 1%, or not more than 0.1%, or not more than 0.01%, or zero. It may be that the waveform frequency is matched to the (e.g., in-use) resonant frequency of the respective nozzle in a way that the difference is not more than 10 kHz, or not more than 1 kHz, or not more than 100Hz, or not more than 10 Hz, or not more than 1 Hz, or zero Hz. The difference may be not more than 10% with respect to the (e.g. in- use) resonant frequency of the respective nozzle, or not more than 5%, or not more than 1%, or not more than 0.1%, or not more than 0.01%, or zero. The (e.g.in-use) resonant frequency of the nozzle is typically from 100000 kHz to 10 kHz, more typically from 10000 kHz to 20 kHz, still more typically from 5000 kHz to 50 kHz, and most typically from 2000 kHz to 100 kHz. The (e.g., in-use) resonant period of the nozzle is typically from 0.01 $\mu$s (microsecond) to 100 $\mu$s (microsecond), more typically from 0.1 $\mu$s to 50 $\mu$s, still more typically from 0.2 $\mu$s to 20 $\mu$s, and most typically from 0.5 $\mu$s to 10 $\mu$s.

It will be understood that the resonant frequency of a nozzle may be influenced by the dimensions and materials of the nozzle as well as those of the respective actuator. To align the resonant frequency as described in the previous paragraph, it is desirable that all the nozzles in the printhead have corresponding materials and dimensions, and all the actuators in the printhead have corresponding materials and dimensions. It may be that said nozzles have the same dimensions and materials. It may be that said actuators have the same dimensions and materials. Herein, dimensions include geometries, sizes and/or configurations of the nozzle and the actuator. Materials refers to the articles (e.g. substances, mixtures) used to build the nozzle and the actuator.

It will be further understood that the resonant frequency may also be influenced by viscosity and density (and also surface tension) of the ink composition in the nozzle. Thus, there is a need to align those parameters of different ink compositions so that the resultant resonant frequency of the nozzles is the same or similar (as described above). It will be further understood that since the present invention is different from the existing technologies which depend on either compressibility mode or thermo-ejection mode (e.g a thermal inkjet printhead), the alignments of ink properties such as compressibility (e.g. acoustic compressibility), and/or volatility, and/or heat capacity (Cp), and/or thermal conductivity are usually not required. In other words, there is usually no need to match (e.g. no need to match in a way as described in a second aspect hereinafter) one or more said properties between different ink compositions of the set.

In a second aspect, there is provided a set of different ink compositions for use in a monolithic inkjet printhead according to the first aspect, wherein: (i) the viscosity values of said compositions are matched in a way that the difference between any two compositions is not more than 5% of the largest viscosity value of the set, preferably not more than 1%; (ii) the density values of said compositions are matched in a way that the difference between any two compositions is not more than 5% of the largest density value of the set, preferably not more than 1%; and (iii) the surface tension values of said compositions are matched in a way that the difference between any two compositions is not more than 5% of the largest surface tension value of the set, preferably not more than 1%. It is also possible that there is no difference between any two compositions of the set with respect to viscosity value, and/or surface tension value, and/or density value. Herein, it will be understood that all possible combinations of the ranges of the viscosity, density, surface tension and the preferred ranges of the viscosity, density, surface tension are also contemplated. The differences in viscosity, density and surface tension between any two compositions are not more than 5% of the largest corresponding value of the set. It may be that the difference in viscosity between any two compositions is not more than 5% of the largest viscosity of the set, the difference in density between any two compositions is not more than 5% of the largest density of the set, and the difference in surface tension between any two compositions is not more than 5% or 1% of the largest surface tension of the set.

As stated above, there is generally no need to match compressibility of the ink compositions. Herein, compressibility (k) refers to the fractional change in volume per unit increase in pressure, typically measured at 20°C (and 1 atmosphere pressure).

The compressibility (k) is also known as the reciprocal of the Bulk modulus (B). For example, for each atmosphere increase in pressure, the volume of water would decrease 46.4 parts per million (i.e., k=46.4).

In the context of the present invention, it may be that the difference of compressibility (k) of two ink compositions of the set, or of any two ink compositions in the set, is at least 1% or at least 5% of the largest compressibility value of the set, or at least 10%, or at least 20%, or at least 30%, or at least 40% or at least 50% of the largest compressibility value of the set.

In some embodiments, the difference in viscosity between any two compositions is not more than 1% of the largest viscosity of the set, the difference in density between any two compositions is not more than 1% of the largest density of the set, and optionally the difference in surface tension between any two compositions is not more than 1% of the largest surface tension of the set, whereas the difference in compressibility (k) of two ink compositions of the set, or of any two ink compositions in the set, is at least 1%.

In the context of the present invention, it may be that the viscosity values, the density values, and the surface tension values of the set of different ink compositions are matched in a way that the ejected ink droplets from the monolithic inkjet printhead have corresponding volume and velocity. A 'printed test pattern' method as described herein can be used to evaluate whether the droplets correspond.

It may be that the viscosity, density and surface tension of the set are matched according to the combination of the above two paragraphs. Herein, 'different ink compositions' refer to ink compositions that comprise one or more components that are different from each other, and/or have one or more weight percentages that are different from each other. The weight percentages can be for the same or different components comprised in the compositions, and all weight percentages referred to are based on the total weight of the respective ink composition. For instance, the set may comprise a first composition comprising 80% aqueous carrier, and a second composition comprising 80% organic carrier; or the composition may comprise a first composition comprising 80% aqueous carrier, and the second composition comprising 85% aqueous carrier. At least two compositions of the set are different from each other, and it may be that any two compositions of the set are different from each other.

In the context of the present invention, it may be that the viscosity values of the compositions are matched in a way that the difference between any two compositions is not more than 4 mPa·s, or not more than 2 mPa·s, or not more than 1 mPa·s, or not more than 0.2 mPa·s, or zero. It may be that the density values of the compositions are matched in a way that the difference between any two compositions is not more than 200 kg/m$^3$, or not more than 100 kg/m$^3$, or not more than 50 kg/m$^3$, or not more than 10 kg/m$^3$, or not more than 1 kg/m$^3$, or zero. It may be that the surface tension values of the compositions are matched in a way that the difference between any two compositions is not more than 7 mN/m, or not more than 5 mN/m, or not more than 2 mN/m, or not more than 1 mN/m or zero.

It may be that the viscosity values of the compositions are from 1.5 mPa·s to 20 mPa·s, or from 5 mPa·s to 15 mPa·s, or from 7.5 mPa·s to 12.5 mPa·s. The density values of the compositions may be from 650 kg/m$^3$ to 1750 kg/m$^3$, or from 800 kg/m$^3$ to 1500 kg/m$^3$, or from 1000 kg/m$^3$ to 1250 kg/m$^3$. The surface tension values of the compositions may be from 20 mN/m to 75 mN/m, or from 25 mN/m to 70 mN/m, or from 30 N/m to 65 N/m, or from 35 mN/m to 60 mN/m, or from 40 mN/m to 55 mN/m. It will be understood that the viscosity, density and surface tension values of the different ink compositions are suitably matched as described herein (i.e., any possible combinations are also contemplated), and optionally those values may also be in the numerical ranges as described herein (i.e., any possible combinations are also contemplated). For instance, it may be that the difference in viscosity is not more than 4 mPa·s, the difference in density is not more than 50 kg/m$^3$, the difference in surface tension is not more than 5 mN/m, and optionally the viscosity values are from 5 mPa·s to 15 mPa·s, the density values are from 800 kg/m$^3$ to 1500 kg/m$^3$ and the surface tension values are from 30 N/m to 65 N/m (e.g. from 35 mN/m to 60 mN/m, or from 40 mN/m to 55 mN/m).

A suitable test method for viscosity may be based on or derived from ASTM D 4040-99. Suitably, the viscosities mentioned in the present invention are measured at 25 °C/1 atmosphere pressure by using a rotatory viscometer (RE-80L, manufactured by TOKI SANGYO CO., LTD.). A standard cone rotor (1°34' x R24) geometry can be used and the ink sample size is about 1.2 mL. The speed of rotations of the geometry is 50 rotations per minute (rpm). Th measurement lasts three minutes. A viscosity value is recorded at the end of the three-minute measurement. Typically, three repeats are needed for one ink sample, and the reported viscosity value is the average of these three measurements.

A suitable test method for density may be based on or derived from ASTM D1475-98. Suitably, the densities mentioned in the present invention are measured at 25 °C/1 atmosphere pressure by using a clean and dry measuring cylinder (e.g. 100 mL or 250mL). A balance is used to measure the mass (M) of the cylinder (e.g. typically in grams). The cylinder is then taken off the balance and filled with an ink sample. The volume (V) of the ink sample is recorded. The filled cylinder is put back on the balance and a new mass is recorded. The density of the ink sample is determined by the following equation:

$$D_{density} = (M_{cylinder+ink} - M_{cylinder}) / V_{ink}$$

Typically, three repeats are needed for one ink sample, and the reported density value is the average of these three measurements.

A suitable test method for surface tension may be based on or derived from ASTM D1331-20. Suitably, the surface tensions mentioned in the present invention are measured at 25 °C/1 atmosphere pressure by using a Kruss tensiometer (e.g. Kruss K11, K100). A ring method (i.e. the probe is a ring) can be used. Typically, the tensiometer is calibrated by water (e.g surface tension = 72 mN/m) prior to each ink measurement. A suitable amount of ink sample (e.g. 2mL- 5mL) is put into a sample container which equilibrates at 25°C. The experimental procedure of obtaining a surface tension value typically follows the steps described in the supplier's manual. These steps typically include lowering the ring to make contact with the ink surface, waiting for equilibrium, lifting the ring up from the ink surface, and recording the surface tension value measured during the lifting process. Typically, three repeats are needed for one ink sample, and the reported surface tension value is the average of these three measurements.

In the context of the present invention, the set of different ink compositions may have the following chemical characteristics.

Colourants

It may be that the set of different ink compositions comprises a plurality of ink compositions, each comprising a different colourant (i.e., any two compositions of the set comprising colourants that are different from each other). Typically, the colourant is selected from cyan (C), yellow (Y), magenta (M), key (K), red (R), green (G), blue (B), orange, violet, gold, silver, white, and mixtures thereof, more typically selected from CYMK and mixtures thereof, or selected from RGBK and mixtures thereof. It may be that the set of different ink compositions comprise a first composition comprising a cyan (C) or red (R) colourant, a second composition comprising a yellow (Y) or green (G) colourant, a third composition comprising a magenta (M) or blue (B) colourant and a fourth composition comprising a key (K) colourant. Preferably, the first composition comprises a cyan(C) colourant, the second composition comprises a yellow (Y) colourant, the third composition comprises a magenta (M) colourant, and the fourth composition comprises a key (K) colourant.

In a suitable example, the printhead comprises four groups of ejectors (channels), wherein each of the four groups of ejectors comprises a plurality of nozzles (e.g. 100 or 1000) and each group is operatively coupled to or coupled to a coloured ink composition as described above, to allow ejection of the composition from the plurality of the nozzles. In the same example, it may be that each of the four ink compositions comprises a different colourant. Preferably the four ink compositions are with CMYK or RGBK colourants, more preferably CMYK colourants.

The colourants can be pigments, dyes, or lakes (i.e., dyes precipitated from solvent to a solid form), typically pigments or dyes. The pigments may be inorganic pigments, organic pigments, pearl pigments, metal pigments, or mixtures thereof. Inorganic pigments can be selected from titanium oxide, zinc oxide, zinc sulphate, iron oxide, calcium oxide, antimony oxide, magnesium oxide, zirconium oxide, Cl. Pigment Whites 6, 18, and 21, barium sulphate, aluminium hydroxide, barium yellow, cadmium red, chrome yellow, carbon black (e.g. acetylene black, channel black, furnace black, lamp black, thermal black), and mixtures thereof. Those pigments can be produced by known and effective methods such as the contact method, the furnace method, and the thermal method. Organic pigments can be selected from azo pigments (e.g., insoluble azo pigments, condensed azo pigments, chelate azo pigments), polycyclic pigments (e.g. phthalocyanine pigments, diarylide pigments, xanthene pigments, perylene pigments, perinone pigments, anthraquinone pigments, anthrapyridone pigments, quinacridone pigments, dioxazine pigments, indigo pigments, thioindigo pigments, isoindolinone pigments, and quinophthalone pigments), dye chelates, nitro pigments, nitroso pigments, aniline black, white hollow resins, and mixtures thereof. Pearl pigments can be selected from titanium dioxide-coated mica, fish scale foil, bismuth trichloride, and mixtures thereof. Metal pigments are usually elemental or mixed metals, selected from aluminium, silver, gold, platinum, nickel, chromium, tin, zinc, indium, titanium, copper, and alloys thereof. Dyes can be selected from acid dyes, direct dyes, reactive dyes, basic dyes, food dyes, and mixtures thereof. Examples of the dyes include C.I. Acid Yellow 17, 23, 42, 44, 79, and 142, C.I. Acid Red 52, 80, 82, 249, 254 and 289, Disperse Red 60, C.I. Acid Blue 9, 45, and 249, C.I. Acid Black 1, 2, 24, and 94, C. I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35. The total level of colourant is suitably from 0.01% to 10% by weight of a total ink composition, or from 0.1 to 8 wt%, or from 0.5 to 5 wt%, or from 1 to 3wt%. Typically, the difference of weight percentages of the total colourants comprised in at least two compositions of the set or any two compositions of the set is not more than 5, or not more than 2, or not more than 1, or not more than 0.1, or zero. Herein, it is also possible that the difference of weight percentages of the total colourants comprised in at least two compositions of the set or any two compositions of the set is at least 0.01, or at least 0.1, or at least 1, or at least 2, or at least 5.

Typically, the set of different ink compositions comprises a first composition comprising a cyan(C) or red (R) colourant, a second composition comprising a yellow (Y) or green (G) colourant, a third composition comprising a magenta (M) or blue (B) colourant and a fourth composition comprising a key (K) colourant, wherein each said colourant is present from 1 to 10% (e.g. from 1% to 5%, or from 1% to 3%) by weight of the respective composition. Optionally, the difference of weight percentages of these colourants comprised in at least two compositions, or any two compositions is not more than 2, or not more than 1, or not more than 0.1, or zero. For instance, the first composition may comprise 2wt% cyan colourant, the second composition may comprise 2.5 wt% yellow colourant, the third composition may comprise 3 wt% magenta colourant and the fourth composition may comprise 4 wt% key colourant. Optionally, the difference of weight percentages of the colourants comprised in at least two compositions of the set, or any two compositions of the set, is at least 0.01, or at least 0.1, or at least 0.5, or at least 1, or at least 2. For instance, the first composition may comprise 1 wt% cyan colourant, the second composition may comprise 3 wt% yellow colourant, the third composition may comprise 5wt% magenta colourant and the fourth composition may comprise 7wt% key colourant.

In the context of the present invention, it may be that one or more components (excluding the colourants that are present) of at least two coloured ink compositions or any two coloured ink compositions are different. Additionally or alternatively, it may also be that the weight percentages of one or more components (excluding the colourants that are present) of at least two coloured ink compositions or any two coloured ink compositions are different.

It may be that at least one ink composition of the set or each ink composition of the set further comprises one or more components selected from carriers, rheological modifiers, surfactants, dispersants, defoaming agents, corrosion inhibitors, UV-curable resins, preservatives, and humectants, or selected from carriers, rheological modifiers, surfactants, and humectants, or selected from carriers, rheological modifiers, and surfactants, or selected from rheological modifiers. It may be that at least one ink composition of the set or each ink composition of the set comprises a carrier, and/or a rheological modifier, and/or a surfactant. It may be that at least one ink composition or each ink composition comprises a carrier, a rheological modifier, and a surfactant.

Rheological modifier

It may be that at least one ink composition of the set or each ink composition of the set comprises a rheological modifier. The modifier helps to modify (e.g. adjust) the rheological behaviour (e.g. viscosity) of the ink composition. In this way, if the viscosity values do not match within the set, the rheological modifier can increase or decrease viscosity (where appropriate) in order to aid the matching. Although not necessary, it is desirable for at least two compositions of the set or all the compositions to have the same rheological modifier. It is also possible that at least two compositions of the set or any two compositions of the set have rheological modifiers that are different from each other. Those skilled in the art can effectively adjust the types and/or levels of the modifiers comprised in the compositions. Typically, the total level of the rheological modifiers by weight of a total ink composition is from 0.1 to 25%, or from 1 to 20wt%, or from 2 to 15wt%, or from 5 to 10wt%. Typically, the difference of weight percentages of the total rheological modifiers comprised in at least two compositions of the set or any two compositions of the set is not more than 10, or not more than 5, or not more than 1, or not more than 0.1. For instance, the first composition may comprise 20 wt% modifier(s), the second composition may comprise 10 wt% modifier(s) and the third composition may comprise 15 wt% modifier(s). It may also be that at least two compositions of the set (e.g. all compositions of the set) comprise the same level of rheological modifiers. It is also possible that the difference of weight percentages of the total rheological modifiers comprised in at least two compositions of the set (e.g. any two compositions of the set) is at least 0.01, or at least 0.1, or at least 1, or at least 2, or at least 5, or at least 10. For instance, the first composition may comprise 20 wt% modifier(s), the second composition may comprise 25 wt% modifier(s), and the third composition may comprise 15wt% modifier(s).

A suitable example of a rheological modifier is a polymer. The polymer can be natural or synthetic. Additionally and optionally, it can be selected from anionic polymers, non-ionic polymers, or amphoteric polymers. Typically, the polymer is a polyurethane, polyacrylic or polyacrylate, polysaccharide (e.g. cellulose, mannose, fructose, galactose, glucose, mannose, ribose, xylose, arabinose, gum, guar, pectin, starch), polyvinyl alcohol, or an ethoxylated polymer. A preferred choice is a polyacrylic or polyacrylate homopolymer or copolymer. Such a polymer can be prepared by addition polymerization of a mixture of ethylenically unsaturated monomers. The polyacrylic or polyacrylate can also be a linear or crosslinked copolymer and such a copolymer can be optionally hydrophobically modified. Typically, the ink composition (e.g. at least one ink composition of the set or all ink compositions of the set) comprises a rheological modifier which is a polymer (e.g. polyacrylic or polyacrylate as described herein), at a level of from 0.1 to 5 by weight of the total composition, or from 0.2 to 2wt%, or from 0.5 to 1wt%.

Commercial examples of polymer rheology modifiers include, but are not limited to, ACRYSOL® RM-5000 and ACRYSOL® RM-825 (Rohm & Haas, a wholly owned subsidiary of Dow Chemical Company); BORCHIGEL® L75N, BORCHIGEL® L0625, and BORCHIGEL® L W44 (all available from OMG Borchers GmbH, Langenfield, Germany) BYK® 428 and BYK® 429 (both available from BYK Chemie GmbH); and DSX® R2000 E, DSX® R3000 E, and DSX® R3075 E (all available from Cognis GmbH, Monheim am Rhein, Germany).

Another suitable example of a rheological modifier is glycerol. Other polyols may also be used. It is found that glycerol may effectively increase the viscosity of the ink composition, aiding the matching of viscosity values. Typically, the ink composition (e.g. at least one ink composition of the set or all ink compositions of the set) comprises from 5 to 25% glycerol by weight of the total composition, or from 7 to 20 wt%, or from 10 to 15 wt%. It may be that one or more compositions of the set (e.g. all compositions of the set) comprise a glycerol, or comprise both glycerol and polymer rheology modifier(s), optionally the ratio of glycerol/polymer being from 100/1 to 1/1, or from 50/1 to 2/1, or from 20/1 to 5/1, or from 15/1 to 10/1. It may also be that one or more compositions of the set comprise a glycerol and one or more compositions comprise a polymer rheological modifier.

The carrier

It may be that one or more ink compositions (e.g. all ink compositions) of the set comprise a carrier. The carrier is typically a liquid at 20°C at atmospheric pressure. Herein, carrier refers to a liquid in which other components of the ink composition can be dispersed or dissolved to form said composition.

An ink composition can suitably comprise one or more carriers. The ink composition can be water based or oil based. Thus, the carriers can be aqueous carriers, organic carriers or mixtures thereof. It is advantageous that at least two compositions of the set or all the compositions of the set comprise the same carrier, or comprise at least the same type of carriers (e.g. all the compositions comprise an aqueous carrier, or comprise an organic carrier, or comprise a mixture of aqueous and organic carriers). In this way, the densities of the set may be matched with ease. It is also possible for at least two compositions of the set or any two compositions of the set to comprise different carriers, or to comprise different types of carriers (e.g. one of the at least two ink compositions comprises an aqueous carrier and the other of the at least two ink compositions comprises an organic carrier).

Herein, an aqueous carrier typically refers to a carrier containing water, typically at least 50% water by weight of the total aqueous carrier, or at least 70 wt%, or at least 80 wt%, or at least 90wt%, or at least 95wt%, or 100 wt%. The aqueous carrier can be water. Typically, the water is purified water. Examples of purified water include but are not limited to deionized water (D.I., water), ultra-filtrated water, distilled water, and ion exchanged water. The use of such water can prevent microorganism (e.g. fungi, mould) growth during ink storage, hence promoting ink hygiene.

The carrier can be an oil. Herein, the term 'oil' signifies a water-insoluble organic material that is liquid at 20°C. Any material having a solubility of less than 0.1g/100MI at 20°C is considered to be insoluble. Oils can be selected from hydrocarbons (e.g. aliphatic hydrocarbons, isomerized aliphatic hydrocarbons, branched or linear chain aliphatic hydrocarbons, aromatic hydrocarbons), silicone oils, vegetable oils, and mixtures thereof. Oil carriers are organic carriers.

The carrier can also be a water-soluble or water miscible organic carrier. Suitable examples include but are not limited to ethanol, isopropyl alcohol, acetone, diacetone alcohol, polyols (e.g. ethylene glycol, diethylene glycol, triethylene glycol, polyethylene glycol, propylene glycol, dipropylene glycol, tripropylene glycol, polypropylene glycol, propanediol, butanediol), glycol ethers (e.g., ethylene glycol monomethyl ether, diethylene glycol monomethyl ether, diethylene glycol monoethyl ether, diethylene glycol monobutyl ether), amines having a hydroxyl group and mixtures thereof.

Other suitable examples of the carriers include but are not limited to triethylene glycol monobutyl ether, 2-[2-(2-butoxyethoxy)ethoxy]ethanol, 3-Methyl-1,5-pentanediol, Poly(oxy-1,2-ethanediyl), $\alpha,\alpha$'-[1,4-dimethyl-1,4-bis(2-methylpropyl)-2-butyne1,4-diyl]bis[omega.-hydroxy], Bis(2-ethoxyethyl) ether and 1-ethoxy-2-(2-methoxy ethoxy)ethane.

The total level of carriers in an ink composition is typically from 10 to 85 %, or from 15 to 80 %, or from 20 to 75%, or from 50 to 70% by weight of the total composition. If the carrier is an aqueous carrier (e.g. water), the total level in an ink composition is typically from 50 to 85 wt%, or from 55 to 80wt%, or from 60 to 70wt%. If the carrier is an organic carrier (e.g. an oil, a water-soluble organic carrier) or a mixture of organic carriers, the total level is typically from 10 to 60 wt%, or from 20 to 50 wt%, or from 30 to 40 wt%. If the carrier is a mixture of aqueous and organic carriers, the weight ratio of the aqueous to the organic carriers may be at least 1/1, or greater than 1/1. Typically, the difference of weight percentages of the carriers comprised in any two compositions of the set or at least two compositions of the set is not more than 10, or not more than 5, or not more than 1, or not more than 0.1. It is also possible for all the compositions of the set to comprise the same level of carriers. For instance, the set may comprise five different ink compositions and each ink composition comprises 80 wt% carrier(s) in total. It is also possible that the difference of weight percentages of the carriers comprised in at least two compositions of the set (e.g. any two compositions of the set) is at least 0.01, or at least 0.1, or at least 1, or at least 5, or at least 10.

The surfactant

It may be that at least one ink composition or each ink composition of the set comprises a surfactant. The surfactant is typically used to lower the surface tension of the ink composition. In this way, the surfactant helps to adjust (if needed) the surface tension of the ink composition. The surfactant may be selected from anionic surfactants, non-ionic surfactants, cationic surfactants, amphoteric surfactants, and mixtures thereof. It is desirable for any least two compositions of the set or any two compositions of the set to comprise the same surfactant, or to comprise at least the same type of surfactants (i.e. all the compositions comprise an anionic surfactant, or comprise a cationic surfactant, or comprise a non-ionic surfactant, or comprise an amphoteric surfactant). It is also possible for at least two compositions of the set or any two compositions of the set to comprise surfactants different from each other, or to comprise different types of surfactants (e.g. one of the at least two ink compositions comprises an anionic surfactant and the other of the at least two ink compositions comprises an non-ionic surfactant).

Typically examples of the surfactants include but are not limited to acetylenic surfactants, phosphate surfactants (e.g. phosphate esters of fatty alcohols or fatty alcohol alkoxylates), acetylene glycol-based surfactants, silicone-based surfactants (e.g. polysiloxanes), polyethylene glycol (PEG)-based surfactants (e.g. PEG 8000, Polysorbate 80, Pluronic F-68, PEG-fatty acids), fluorine-based surfactants (e.g. fluorine-modified polymers), and mixtures thereof.

The total level of the surfactants is typically from 0.01% to 10% by weight of an ink composition, or from 0.02 to 2.5 wt%, or from 0.05 to 2 wt%, or from 0.1 to 1 wt%. Typically, the difference of weight percentages of the surfactants comprised in at least two compositions of the set or any two compositions of the set is not more than 5, or not more than 2, or not more than 1, or not more than 0.1. It is also possible for all the compositions of the set to comprise the same level of surfactants. For instance, it is possible for a set to comprise five different ink compositions and each composition comprises the same level of surfactants in total. It is also possible that the difference of weight percentages of the surfactants comprised in at least two compositions (e.g. any two compositions of the set) is at least 0.01, or at least 0.1, or at least 1, or at least 2, or at least 5.

The humectant

It may be that at least one ink composition or each ink composition of the set comprises a humectant. The humectant is typically a water-soluble or water-miscible organic compound. Inclusion of such a compound may improve the moisturization of the ink composition so that the nozzle is less likely to be clogged even if unattended for a long time.

Typically, the humectant comprises a hydrophilic group. A humectant can be selected from alkyl polyols (e.g. ethylene glycol, propylene glycol, glycerol), nitrogen-containing cyclic compounds (e.g. 2-pyrolidone, N-methyl-2-pyrolidone), lactones (e.g., γ-butyrolactone), betaines, glycol ethers (e.g., diethylene glycol mono-butyl ether, propylene glycol monoethylether), ureas (e.g. ethyl urea, tetramethyl urea, thiourea, 1,3-dimethyl-2-imidazolidinone), amides (e.g. N-methylformamide), amines (e.g.monoethanolamine, triethylamine), and mixtures thereof.

The total level of humectants is typically from 0.1% to 30% by weight of a total ink composition, or from 0.2 wt% to 20 wt%, or from 0.5 to 15wt%, or from 1 to 10 wt%, or from 2 to 5wt%. The amount included is effective against clogging as well as possible for a skilled worker to match the values of the viscosity, density and surface tension of the set.

Other optional components

Further, at least one ink composition of the set or each ink composition of the set may comprise a preservative. Examples may include sodium benzoate, sodium pentachlorophenol, phenoxyethanol, 2-pyridinethiol-1-oxide sodium, sodium sorbate, sodium dehydroacetate, 1,2-benzisothiazolin-3-one, and 4-Chloro-3-methylphenol. The ink composition may comprise a UV-curable resins (e.g. acrylated epoxies, acrylated polyesters, acrylated urethanes, acrylated silicones). The ink composition may comprise a dispersant. Examples of dispersants may include anionic dispersants (e.g. naphthalene sodium sulfonate), non-ionic dispersants, polymer dispersants (e.g. acrylic resins, styrene resins, urethane resins). The composition may comprise a defoaming agent such as silicone-based defoaming agent, polyether-based defoaming agent, aliphatic acid ester-based defoaming agent. The composition may comprise a corrosion inhibitor such as acid sulphite, and sodium thiosulfate. Each of the above optional components may be present in an amount effective to accomplish its purpose in the ink composition. Generally, these optional components are included individually at an amount of up to 5%, by weight of a total ink composition. At least one ink composition of the set or each composition of the set may comprise one or more optional components as described herein.

In preferred embodiments, at least one composition of the set or each composition of the set comprises a colourant (e.g. 0.01-10 wt%), a carrier (e.g. 10-85 wt%), a surfactant (e.g. 0.01-5 wt%) and a rheological modifier (e.g. 0.1-25 wt%). Said composition may also comprise one or more other ingredients as described herein (e.g. a humectant optionally from 0.1 to10 wt%). In still preferred embodiments, a set of different ink compositions comprises a first composition comprising a cyan (C) or red (R) colourant, a second composition comprising a yellow (Y) or green (G) colourant, a third composition comprising a magenta (M) or blue (B) colourant and a fourth composition comprising a key (K) colourant (e.g. black colourant), wherein each said colourant is present from 1 to 10% by weight of the respective composition. In the same or other embodiments, it may be that at least one composition of the set or each composition of the set further comprises a carrier (e.g. 10-85 wt% or 50-80 wt%), a surfactant (e.g. 0.01-5 wt% or 0.1-2 wt%, and a rheological modifier (e.g. 0.1-25 wt%, or 0.5- 20 wt%).

In the above-mentioned preferred embodiments and other embodiments, the difference of weight percentages of the colourants comprised in at least two compositions, or any two compositions of the set may be not more than 5, or not more than 2, or not more than 1, or not more than 0.1 and any weight percentage is based on the total weight of a respective ink composition. It is also possible that the difference of weight percentages of the total colourants comprised in at least two compositions of the set (e.g. any two compositions of the set) is at least 0.01, or at least 0.1, or at least 1, or at least 2, or at least 5. Alternatively or additionally, it may be that the difference of weight percentages of the rheological modifiers, and/or the surfactants, and/or the carriers comprised in at least two compositions or any two compositions is not more than 20, or not more than 10, or not more than 5, or not more than 1, or not more than 0.1. Alternatively or additionally, at least two compositions of the set or any two compositions of the set may comprise rheological modifiers different from each other, and/or surfactants different from each other, and/or carriers different from each other, and optionally wherein the difference of weight percentages of the rheological modifiers, and/or the surfactants, and/or the carriers comprised in at least two compositions of the set (e.g. any two compositions of the set) is at least 0.1, or at least 1, or at least 5, or at least 10.

Manufacturing method of the ink compositions

In a further aspect, there is provided a method of making the set of different ink compositions for use in the printing apparatus, as described herein. The method comprises the steps of: (i) making at least two ink compositions; (ii) determining whether the viscosity, density and surface tension values of the at least two ink compositions are matched in a way as described herein (i.e. the set is a set of different ink compositions according to the present invention); and (iii) if this is not the case, modifying at least one of the at least two ink compositions one or more times until the set of the compositions is a set according to the present invention.

The method may further comprise the steps of: (a) mixing the carrier, the colourant, the rheological modifier, the surfactant, and optionally other components (e.g. other components as described herein), and optionally (b) filtering to remove impurity or impurities from the mixture.

Steps (a) and/or (b) may be optionally repeated.

In step (a), the mixing can be in any appropriate order. It is typically performed by adding the required components into a container equipped with a stirrer (e.g. a magnetic stirrer, a sand mill, a homogenizer, a ball mill), and mixing therein until homogeneity. The mixing can also be done by using a paint shaker, or an ultrasonic dispersing device, or any suitable high-speed dispersing device.

The viscosity, density and surface tension values of an ink composition can be determined by any suitable methods, for example, by the ASTM methods or suitable methods described herein. Virtual simulation (e.g. computer calculation to predict those values of the ink) is not excluded. If the values are matched as described herein (i.e. the set of ink compositions is a set of different ink compositions As according to the present invention), further modification(s) of the ink may not be necessary.

If the values are not matched as described herein, the viscosity, density and surface tension can suitably be modified (e.g. adjusted), for example, by adjusting the types and/or levels of the rheological modifiers, the carriers, and the surfactants respectively. The modified (e.g. adjusted) ink composition(s) may be determined for its viscosity, density and surface tension. If needed, further modification (e.g. adjustment) may be performed to achieve the matching as described herein. In other words, steps (ii) and (iii) of the method may be optionally repeated until the matching is achieved (i.e. until the set of the compositions is a set according to the present invention).

The resulting set of different ink compositions may be used in printing. The resulting set of different ink compositions may be used as the specification for inks to be manufactured. Corresponding inks may then be manufactured.

Selecting a set of ink compositions

In still a further aspect, there is provided a method of selecting a set of different ink compositions for use in the printing apparatus, comprising the steps of: (i) defining at least one characteristic of an ejected ink droplet; (ii) using the at least one defined characteristic to determine target values of viscosity, density and surface tension of an ink composition; and (iii) selecting at least two ink compositions with reference to the target values as described in steps (ii), wherein the values of the at least two ink compositions are also matched in a way as described herein (i.e. the set of the ink compositions is a set of different ink compositions according to the present invention).

The at least one defined characteristic may be used to determine target values of viscosity, density and surface tension of an ink composition in combination with a printhead according to the invention, or a simulation thereof.

The at least one defined characteristic of the ejected ink droplet may comprise the size of said droplet. Additionally and optionally in step (i), a value of dots per inch (DPI) may also be defined. The DPI may be from 100 to 2000 dpi, or from 300 to 1800 dpi, or from 600 to 1600 dpi. The defined characteristic of the ink droplet (optionally with the defined DPI) helps to determine target physical properties of the ink (i.e. viscosity, density and surface tension). It will be further understood that the characteristic of the ejected droplet and/or the DPI may be defined virtually (e.g. by using a computer-implemented method). The ink compositions are selected with reference to those target physical properties. Herein, 'with reference to' means the physical properties of the selected inks are matched with the target physical properties. Typically, the difference of viscosity is not more than 10 % with respect to the target viscosity, or not more than 5%, or not more than 1%. Typically, the difference of density is not more than 20% with respect to the target density, or not more than 10%, or not more than 5%, or not more than 1%. Typically, the difference of surface tension is not more than 10% with respect to the target surface tension, or not more than 5%, or not more than 1%. Any possible combinations of the sub-ranges are also contemplated. The selected inks also have the physical properties matched with each other, as described herein (i.e. the selected set of ink compositions is a set of different ink compositions according to the present invention).

After target physical properties are determined (i.e. after step (ii)), it may be that a set of candidate ink compositions is first determined. Typically, the candidate ink compositions are already different to each other (due to differences in colour or chemical composition or reactivity). The viscosity, surface tension, and density of the candidates can be determined (e.g. according to the methods as described herein). If the values match with each other (as described herein) and with the target physical properties, the candidate set can be selected (e.g. in accordance with step (iii)). Otherwise, at least one composition of the set can be modified (e.g. one or more times, optionally as by the methods described herein), and the physical properties of the modified set can be determined again. Said modification and determination can be optionally repeated until the required matching is achieved. Then the modified set of different inks can be selected for subsequent manufacture and/or use (e.g. in accordance with step (iii)).

The printer

In still a further aspect, there is provided a printing apparatus comprising a monolithic printhead according to the first aspect. The printing apparatus further comprises a signal generator configured to generate a driving signal having a repeating waveform, and a control circuitry configured to relay the driving signal to the actuators through switches and to control the switches to selectively apply the driving signal to individual actuators to thereby eject ink droplets of the different ink compositions with corresponding volume and velocity. Preferably, the printing apparatus is a printer. The printing apparatus comprises the set of different ink compositions of the invention, and the ink compositions are received or receivable in the chambers of the printhead.

It may be that the printhead and the set of different ink compositions are comprised in an ink cartridge, wherein the compositions are received in the chambers of the printhead. The ink cartridge can be a component part of the printing apparatus.

Suitably, the control circuitry configured to relay the driving signal is comprised in the monolithic inkjet printhead. In other words, the control circuitry can be part of the printhead. Furthermore, the complexity of wiring connections in the printhead can be reduced, because separate control wiring to each actuator need only be provided from the control circuitry on each printhead; the control instructions for any actuators on a printhead can be provided onto the printhead via a single wiring connection to the control circuitry on the printhead.

The control circuitry may comprise a CMOS circuit (i.e. a complementary metal oxide semiconductor) and a plurality of circuit elements each associated with a printhead ejector.

The control circuitry may be integrally formed with the printhead nozzles. In other words, formation of the control circuitry, the printhead nozzles and (optionally) the piezoelectric actuators can be provided at the same time, without requiring assembly of multiple component parts assembled separately. By providing the control circuitry using an integrated circuit, the control circuitry can be provided adjacent the printhead nozzles, thereby ensuring the printhead is compact.

It may be that the control circuitry comprises (a) a digital register. It may be that the control circuitry comprises (b) a nozzle trimming calculation circuit and/or register. It may be that the control circuitry comprises (c) a temperature measurement circuit. It may be that the control circuitry comprises (d) a fluid chamber fill detection circuit.

The digital register may be a shift register, or a latch register, for example. In operation, it may be that data is stored in or read from a register within the control circuitry. In operation, it may be that temperature is measured using a temperature sensitive component of the temperature measurement circuit. In operation, it may be that the fill level of a fluid chamber is measured.

It may be that the control circuitry is configured to modify the voltage pulses applied to one or more electrodes of one or more piezoelectric actuators responsive to data stored by the control circuitry or measurements from one or more sensors, which are typically within the printhead. In operation, it may be that the control circuitry measures the voltage pulses applied to one or more electrodes of one or more piezoelectric actuators responsive to data stored by the control circuitry or measurements from one or more sensors, which are typically within the printhead.

Modifying the voltage pulses may comprise shifting them in time. Modifying the voltage pulses may comprise compressing or expanding them. Modifying the voltage pulses may comprise modifying their magnitude. Modifying the voltage pulses may comprise swapping between a plurality of (typically repeating) sequences of received actuator drive pulses with different profiles. The control circuitry is typically configured to modify the voltage pulses applied to one or more electrodes of one or more individual piezoelectric actuators responsive to data relating to that individual piezoelectric actuator stored by the control circuitry or measurements from one or more sensors.

The control circuitry comprises a plurality of circuit elements each associated with a printhead ejector. The circuit element can be an ejection transistor. The ejection transistor is typically in direct electrical communication (without intervening switched semiconductor junction) with an electrode of the piezoelectric actuator. In operation, it may be that the ejection transistor is controlled to cause a potential output from the ejection transistor to be applied directly to an electrode of the piezoelectric actuator.

The control circuitry may be configured to receive input control signals from outside the printhead and to output actuator control signals to each of the plurality of actuators to control ejection of the inks from the plurality of printhead nozzles.

It may be that the printhead further comprises an electrical input for receiving actuator drive pulses. In operation, the printhead may receive actuator drive pulses.

The printhead may comprise a controller for controlling the printhead. The controller may comprise one or more microcontrollers or microprocessors, which may be integrated or distributed, in communication with or comprising a memory storing program code.

It may be that the controller comprises a signal generator configured to generate (typically a sequence of) actuator drive pulses. Each printhead typically comprises an electrical input connected to the controller through which the actuator drive pulses are received. In operation, the printhead assembly may generate actuator drive pulses (e.g. in a controller) and conduct them to the printhead through an electrical connection.

The actuator drive pulses are typically analogue signals. The actuator drive pulses typically comprise periodic repeating voltage waveforms.

It may be that the control circuitry is configured to switchedly connect or disconnect at least one electrode of the or each of a plurality of piezoelectric actuators to the received actuator drive pulses to thereby selectively actuate the piezoelectric actuators. In operation, it may be that the printhead switchedly connects or disconnects at least one electrode of the or each of a plurality of piezoelectric actuators to the received actuator drive pulses to thereby selectively actuate the piezoelectric actuators.

It may be that the controller comprises one or more pulse generators which generate a plurality of sequences of actuator drive pulses, and electrical inputs of the printhead receive the plurality of sequences of actuator drive pulses (generated by the one or more pulse generators) through a plurality of electrical connections to the controller, and the control circuitry is configured to switchedly connect or disconnect at least one electrode of the or each of a plurality of piezoelectric actuators to received actuator drive pulses selected from a plurality of different received sequences of actuator pulses. In operation, it may be that the printhead generates a plurality of different sequences of actuator drive pulses (e.g. in a controller) and conducts them to the printhead through separate electrical connections, and switchedly connects or disconnects at least one electrode of the or each of a plurality of piezoelectric actuators to one or more received actuator drive pulses received from a variable (and selectable) one of the plurality of different sequences of actuator drive pulses.

The selection as to which received sequence of actuator pulses at least one electrode of piezoelectric actuator is connected to may be responsive to stored data specific to the respective piezoelectric actuator and/or responsive to measurements of operation of the respective piezoelectric actuator. Accordingly, the control circuitry can typically select whether or not each piezoelectric actuator ejects a droplet at each of a sequence of periodic droplet ejection decision points. By a decision point we refer to a time prior to the start of an actuator drive pulses where it is determined whether or not to communicate that actuator drive pulse to at least one electrode of a specific piezoelectric actuator.

Typically, the actuator drive pulses repeat periodically. It may be that the actuator drive pulses are amplified by the controller. It may be that the actuator drive pulses are not amplified by the printhead. It may be that the printhead does not generate actuator drive pulses.

Typically pulses from the pulse generator are conducted to a plurality of control circuits, which may be part of a plurality of printheads. Thus a single pulse generator circuit may drive multiple piezoelectric transducers on the same substrate and/or multiple printheads having separate substrates, each having multiple piezoelectric transducers.

The digital actuation control signals are typically received from a controller. The digital actuation control signals are typically received through a flexible connector. The digital actuation control signals may be received in serial form and converted to parallel control signals using a shift register within the control circuitry.

It may be that the controller comprises a pulse generator configured to generate actuator drive pulses which are conducted to the printhead and digital control signals which are conducted to the printhead and the digital control signals are processed in the control circuitry of the printhead to determine which actuator drive pulses are conducted to at least one electrode of the piezoelectric actuator or piezoelectric actuators of the one or more printhead modules to cause droplet ejection.

In operation, it may be that the printhead assembly generates actuator drive pulses (e.g. at a controller) and digital control signals, and conducts both the actuator drive pulses and the digital control signals to the control circuitry of the printhead and the control circuitry processes the digital control signals and, responsive thereto, conducts selected actuator drive pulses to at least one electrode of the piezoelectric actuator or piezoelectric actuator of the one or more printheads to cause droplet ejection.

Thus, typically analogue actuator drive pulse and digital control signals are input by the control circuitry (and typically by the printhead modules). Typically the digital control signals are used to selectively switch the analogue actuator drive pulses to thereby selectively transmit them to the piezoelectric actuators.

In some embodiments, the control circuitry is configured to switchedly connect one or more of ground and a single fixed non-zero voltage line, or multiple fixed voltage lines of different voltages (one or more of which may be ground) to one or both electrodes of a piezoelectric actuator to cause droplet ejection of print agent. For example, the control circuitry may switch an electrode between a connection to ground and a connection to a fixed voltage or multiple fixed voltage lines of different voltages and back to ground again in order to cause a droplet ejection. Typically, the second printhead module is configured to conduct a said ground and/or a said single fixed non-zero voltage from the first printhead module to the third printhead module.

Switching an electrode between a connection to ground and a connection to a fixed voltage or between fixed voltage lines may comprise operating a latch.

It may be that the control circuitry is configured to individually and selectively actuate at least three (or at least four) said piezoelectric actuator elements formed by one or more said layers on the same substrate and defining part of different respective fluid chambers (with different respective droplet ejection outlets, sometimes referred to as printhead nozzles), optionally wherein the said at least three (or at least four) actuator elements are configured for ejecting different coloured ink compositions or as redundant droplet ejection outlets.

It may be that the said at least three (or at least four) piezoelectric actuator elements are located on the substrate (optionally adjacent each other, optionally in a row) and the control circuitry is connected to a flexible printhead cable having one or more electrical signal conductors, wherein the control circuitry is configured to individually and selectively actuate the actuator elements of the at least three (or at least four) piezoelectric actuator elements responsive to actuation commands received through the same signal conductor.

Thus, due to the integration of the control circuitry which is configured to drive at least three (or at least four) actuator elements, an individual signal conductor may transmit a control signal leading to the actuation of individual actuator elements of the at least three (or at least four) piezoelectric actuator elements. Typically the control signals are digital control signals.

The at least three (or at least four) piezoelectric actuator elements may comprise or are a group of piezoelectric actuator elements, for example a group of piezoelectric actuator elements which are configured to eject the same ink composition (for example have chambers in fluid communication with the same ink supply), or ink compositions of different colours (for example have chambers in fluid communication with separate ink supplies), or a group of piezoelectric actuator elements which are divided into a plurality of (typically at least three or at least four) sub-groups, wherein the piezoelectric actuator elements in each sub-group are configured to eject the same ink composition (for example have fluid chambers in fluid communication with the same fluid supply) and the piezoelectric actuator elements of some or all of the sub-groups are configured to eject ink compositions of different colours (for example are in fluid communication with separate ink supplies). Piezoelectric actuator elements in the same sub-group may be arranged in an array and there may be a plurality of arrays for respective sub-groups.

It may be that the control circuitry is configured to individually and selectively actuate at least double the number of piezoelectric actuator elements than signal conductors through which the control circuitry receives actuation control signals.

It may be that the said control circuitry is configured to individually and selectively actuate at least 128 (or at least 256) piezoelectric actuator elements and the control circuitry receives actuation control signals through at most 32 (or at most 16) signal conductors.

The control circuitry may comprise a serial to parallel conversion circuit configured to convert a digital signal received in serial form through one or more signal conductors into a selection of piezoelectric actuators to be actuated to carry out a droplet ejection simultaneously (i.e. in parallel). The serial to parallel conversion circuit typically comprises one or more shift registers.

Manufacturing of the printing apparatus and the printing method

In still a further aspect, there is provided a method of manufacturing a printing apparatus, comprising the steps of: (i) forming control circuitry in a substrate; (ii) forming a plurality of piezoelectric actuators each in electrical communication with the control circuitry; (iii) forming a plurality of nozzles, each coupled to a respective one of the plurality of piezoelectric actuators; and (iv) forming a plurality of chambers each in fluid communication with a respective one of the plurality of nozzles.

In still a further aspect, there is provided a method of printing comprising the steps of: (i) providing a printing apparatus as described in the previous aspect; and (ii) operating the control circuitry to eject at least two ink compositions of the set according to the second aspect from at least two of the plurality of the nozzles of the plurality of the printhead ejectors. The ink droplets of at least two ink compositions from the at least two of the plurality of nozzles are ejected with corresponding volume and velocity.

Any feature of one aspect may be utilised in any other aspect where appropriate. Any feature of a particular embodiment may be utilized in any other embodiment of the invention where appropriate. Any optional feature (e.g. features described as 'preferred' or 'typical') should be understood to be particularly preferred in combination with a further optional feature or features. Unless otherwise stated, no features described should be considered incompatible with any other features, unless such a combination is clearly and inherently incompatible. It should be generally envisaged that each and every separate feature disclosed in the present invention is combinable in any appropriate way with any other feature, unless explicitly or clearly incompatible. The word 'comprising' is intended to mean 'including' but not necessarily 'consisting of' or 'composed of'. In other words, the listed steps or options need not be exhaustive. Throughout the description and claims of this specification, the singular encompasses the plural unless the context otherwise requires or indicates, and vice versa. In particular, where the indefinite article is used, the specification is to be understood as contemplating plurality as well as singularity, unless the context requires or indicates otherwise. The examples and embodiments given in the description above are intended to clarify the invention but not to limit the invention. All percentages are weight percentages based upon the total weight of relevant materials unless otherwise indicated. Except in the operating and comparative examples, or where otherwise explicitly indicated, all numbers in this description indicating amounts of material or conditions of reaction, physical properties or materials and/or use are to be understood as modified by the word 'about'. Numerical ranges expressed in the format 'from x to y' are understood to include x and y, unless specified otherwise. When for a specific feature multiple optional ranges are described in the format 'from x to y', it is understood that all ranges combining the different endpoints are also contemplated. It will be understood that all possible combinations of the ranges and sub-ranges described herein are also contemplated. For instance, the range of viscosity of not more than 20% of the largest viscosity value of the set is understood to be particularly preferred to be combined with any one of the preferred ranges of density, and further with any one of the preferred ranges of surface tension. For instance, any one of the preferred ranges of viscosity is understood to be particularly preferred to be combined with any one of the preferred ranges of density, and further with any one of the preferred ranges of surface tension. For instance, any one of the optional ranges of the volume is understood to be particularly preferred to be combined with any one of the optional ranges of the velocity.

Description of the Figures

An example embodiment of the present invention will now be illustrated with reference to the following Figures in which:

Figure 1 is a schematic diagram showing an arrangement of an actuator, printhead nozzle and control circuitry as disclosed herein;

Figure 2 is an illustration of the arrangement shown in Figure 1, including a plurality of printhead nozzles;

Figure 3 is a block diagrams of control circuitry for a printhead as disclosed herein;

Figures 4a, 4b and 4c are graphical representations of actuator control signals for the circuitry described herein;

Figure 5 is a flowchart for a procedure for matching a set of inks.

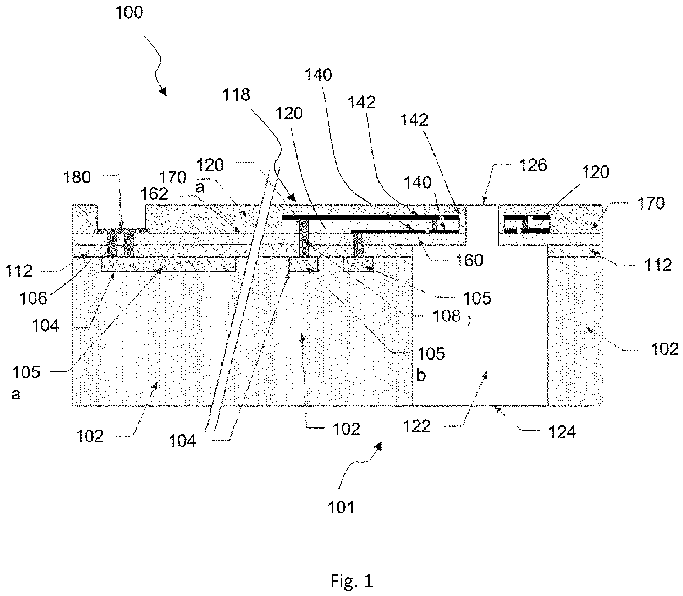

A monolithic inkjet printhead with which the invention is useful, and its operation, is now described with reference to Figures 1 to 4. Figure 1 is a schematic diagram showing an arrangement of an actuator, printhead nozzle and control circuitry. A droplet ejector assembly 100 comprises a silicon substrate 102 comprising control circuitry 104 on the first surface 106 of the silicon substrate 102. The control circuitry 104 is typically an integrated circuit 104 in the form of a CMOS circuit 104. The person skilled in the art will appreciate that a CMOS circuit comprises both doped regions of the substrate and metallisation layers and interconnections formed on the first surface of the substrate. A plurality of layers shown generally as 112 are formed on the first surface 106 of the silicon substrate 102. Layer 112 is the CMOS metallization layer and comprises metal conductive traces and a passivation insulator such as $SiO_2$, SiN, SiON. The droplet ejector assembly 100 further comprises a piezoelectric actuator 118 comprising a piezoelectric body 120 which in this example is formed of AlN or ScAlN but may be formed of another suitable piezoelectric material which is processable at a temperature of below 450°C. The piezoelectric actuator 118 forms a diaphragm with layers of materials such as silicon, silicon oxide, silicon nitride or derivatives thereof and has a passivation layer 160 (sometimes referred to as a nozzle defining layer 160) which prevents applied electrical potentials from contacting fluid.

At least one metallisation layer 112 includes interconnects, conducting signals from an external controller via a bond pad 180 to a first portion 105a of the control circuitry 104 and from second and third portions 105b, 150c of the control circuitry 104 to the piezoelectric actuator via electrical interconnects 108, in particular to first electrodes 140 and second electrodes 142 arranged to apply an electrical potential difference across and thereby actuate the piezoelectric body 120. An opening 120a is defined in the piezoelectric body 120 for passage of the electrical interconnect 108 between the second portion 105b of the control circuitry 104 and the second electrode 142.

The piezoelectric actuator 118 and accompanying passivation layer 160 defines a wall of a fluid chamber 122 which receives print agent, such as ink (in the case of an inkjet printer) or another printable fluid (for example in the case of an additive manufacturing printer) through a conduit 124 and which is in communication with a printhead nozzle 126 for ejecting liquid. The piezoelectric actuator 118 and the nozzle defining layer 160 further define a wall of the printhead nozzle 126. The conduit 124 forms at least part of a print agent manifold providing a fluid communication pathway between a print agent inlet (not shown in Figure 1) and the printhead nozzle126 (as well as further printhead nozzles, not shown in Figure1), via the chamber 122. The conduit 124 is defined by the silicon substrate 102, the metallisation layer 112 and the nozzle defining layer 160. A protective front surface 170 provides the external surface of the droplet ejector assembly 100, provided to cover and protect the piezoelectric actuator 118, and abutting against a surface 162 of the nozzle defining layer 160. The protective front surface 170 has apertures which define the nozzles 126. The piezoelectric actuator 118, chamber 122 and nozzle 126 together form a droplet ejector shown generally as 101.

Typically, the CMOS control circuit comprises patterned regions of doped silicon and metallisation layers. The number of metallisation layers depends on the complexity of the CMOS control circuit but three layers should suffice for many applications.

Although only one printhead nozzle 126 and piezoelectric actuator 118 is shown in Figure 1 for clarity, it will be understood that a plurality of printhead nozzles 126 and corresponding piezoelectric actuators 118 are provided, including actuators which dispense a plurality of different inks. Each piezoelectric actuator 118 is configured to control ejection of print agent from the respective printhead nozzle 126.

The droplet ejector of Figure 1 ejects ink compositions through the nozzle. The piezoelectric transducer is in the nozzle defining layer which moves with the nozzle. Thus the surface of the chamber 122 which includes the nozzle moves during actuation. This contrasts with devices in which the surface which includes the nozzle does not move and another surface, e.g. the opposite surface, is actuated. As a result, only a small actuation force is required to displace the ink in the nozzle. The ink is then ejected mainly by inertial force (i.e. inertial ejection) from the nozzle. Herein, ejection by inertial force can also be referred to as inertial ejection or ejection by inertial mode. The ejection of the ink is dictated predominantly by the density and viscosity of the ink - not be compressibility as would be the case if another surface was actuated and the ink in the chamber was displaced as a whole.

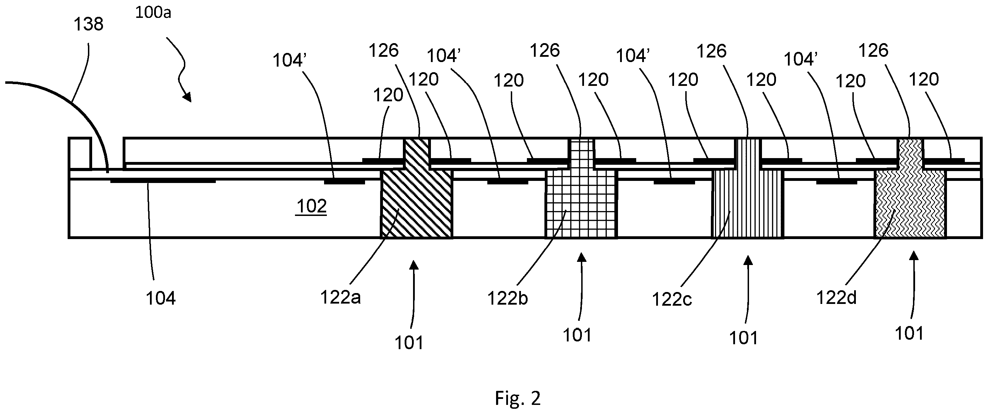

Figure 2 shows an illustration of the arrangement shown in Figure 1, including a plurality of printhead nozzles. With reference to Figure 2 specifically, which shows a printhead 100a having multiple droplet ejectors 101 (individual piezoelectric actuators, fluid chambers and droplet ejection outlets), flexible cable interconnect 138 with a limited number of signal conductors connects an external controller through wires to the printhead 100a that comprises multiple droplet ejectors shown as 101, for ejecting different print agents, for example ink of different colours. The chambers (122a, b, c and d) may comprise ink of different colours. The piezoelectric actuators 118, the control circuitry 104 and the printhead nozzles 126, forming multiple droplet ejectors 101, are typically formed from a single CMOS/actuator substrate, though the print agent manifold of each printhead 100a may be at least partly defined by at least one further component provided in fluid communication with the printhead nozzles 126. In these examples, as well as the main portion of CMOS control circuit 104, the CMOS control circuit includes separate circuit elements 104' associated with each droplet ejector, which may for example comprise a latch and an ejector transistor for each piezoelectric actuator.

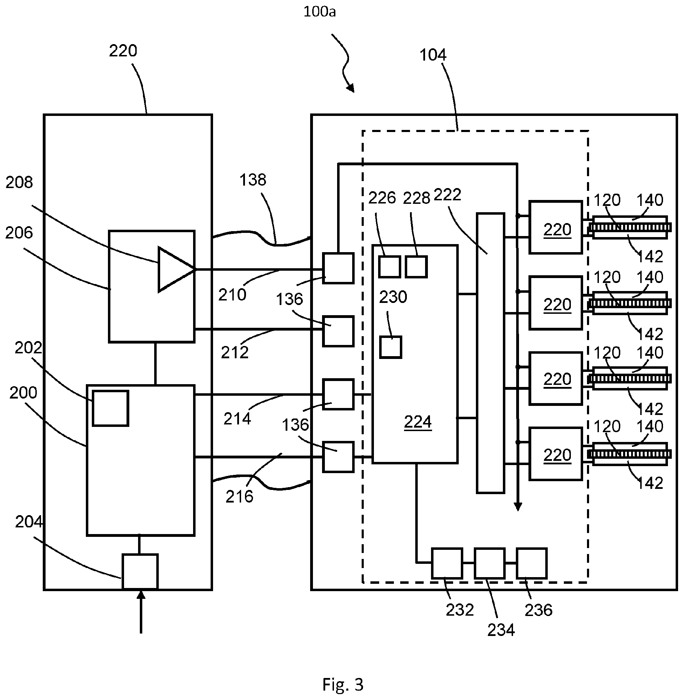

Figure 3 is a block diagram of the control circuitry for a printhead assembly. In this example, actuator control is distributed between a machine controller 220 and the control circuitry (e.g., CMOS circuit) 104 within the printhead 100a. They are connected in part by conductors extending through a single or multiple flexible cable interconnects 138. Multiple actuators 120 are controlled by the application of potentials to their electrodes 140, 142. The machine controller comprises at least a processor 200, such as a microprocessor or microcontroller which has memory 202 storing relevant data and program code. A wired or wireless electronic interface 204 receives input data from an external device driver. One skilled in the art will appreciate that the machine controller may be distributed between a number of separate components or functional modules, such as one component which converts an image into a pixelated pattern for printing using a dither matrix, for example, and a separate component which converts the pixelated pattern into a print pattern for the different nozzles.

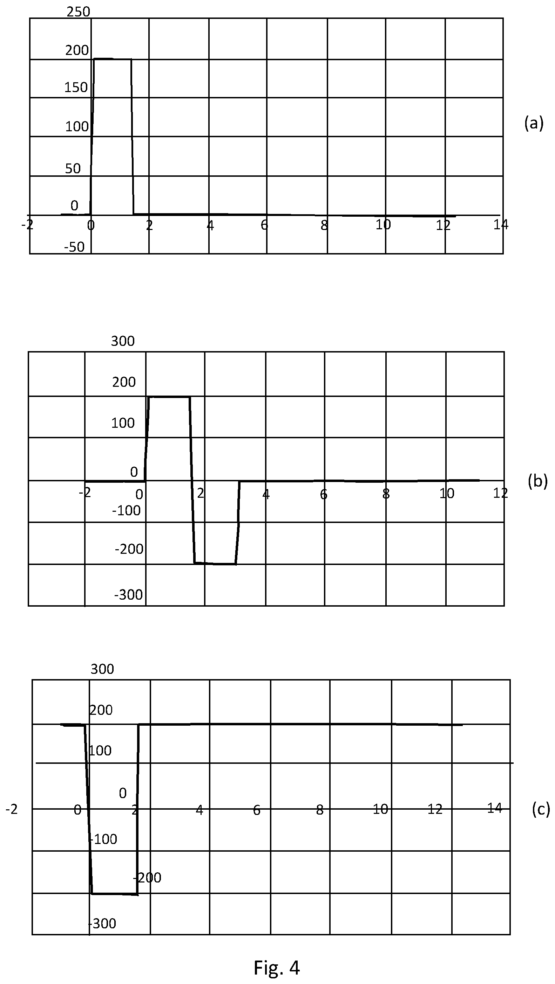

The machine controller comprises a waveform generator and a voltage amplifier 208 which provides a continuous pattern of actuator control pulses (shown in Figure 4) to the printhead through one or more drive signal conductors 210. Although the machine controller is capable of generating a plurality of different waveforms, in the context of the present invention, it is advantageous to generate and use a single waveform for ejecting each type of ink, as this reduces wiring and provides other benefits as described hereinbefore.

A ground conductor 212 also extends from the machine controller to the droplet ejector assembly 100. (Ground connections within printhead not shown for clarity). The processor 200 generates digital control signals 214 typically as a serial bus, and also transmits clock signals 216 to the printhead which serve to synchronise printing with movements of the printhead. The connector also provides voltage levels associated with the operational voltage of CMOS control electronics.

Within the printhead 100a, contact pads 136 are connected to the conductors of the flexible connector and signals are routed through patterned metallised layer 112 to the CMOS control circuit 104 and from the CMOS control circuit to the electrodes 140, 142 which actuate individual piezoelectric bodies 120 within respective piezoelectric actuators. The control circuit 104 on substrate 102 comprises ejection switch circuit 220, including ejection transistors having outputs which are in direct electrical connection with the electrodes 140, 142 (i.e. without a further intervening switching semiconductor junction). The ejection switch circuit switches the actuator control pulse signals and if one of the electrodes remains connected to ground, the ejection switch circuit may be as simple as single transistor per actuator, or a single transistor per electrode to switch the signal applied to that electrode. The ejection switch circuit may be distributed around the substrate with a portion (e.g. a transistor or transistor and latch) proximate each droplet ejector.

The ejection switch circuit does not carry out power amplification. Instead it switches the actuator control pulses, determining whether each pulse is relayed to the respective actuator or not, for each pulse. Voltage amplification is carried out in the machine controller by amplifier 208.

The ejection switch circuit is controlled by latch and shift transistors 222, which receive and store digital data from a control circuit 224 which processes received data, for example converting received serial data, storing these in registers 226 and using the received data to determine which actuators are to actuate during each successive actuator firing events. The control circuit 228 also stores trim data used to customise the precise timing of voltage switching for each actuator, which is typically determined during a calibration step on set-up, and may store configuration data 230 which indicates the physical layout of nozzles, security information and or nozzle actuation count history information. The control circuit 224 also receives data from sensors 232, 234, 236, some of which are associated with individual actuators, for example nozzle fill levels sensors, and some of which sense parameters relevant to the function of the printhead as a whole, for example temperature sensors.

Figures 4(a), 4(b) and 4(c) show three possible drive waveforms generated by waveform generator or voltage amplification 206 in alternative embodiments. The x axis is time (in milliseconds) and the y axis is potential per μm thickness of actuator. As the piezoelectric bodies are made of a non-ferro electric material in this example the pulses may be applied in either direction. In Figure 4(a) the signals have a default voltage of 0 and in each pulse are switch to a positive potential and back to zero after a predetermined period of time. In Figure 4(b) the signals have a default voltage of 0 and are switched first to a positive potential (to cause the piezoelectric actuator to deform in one direction) and then to a negative potential (to cause the piezoelectric actuator to deform in the opposite direction) before returning to zero. In Figure 4(c) the signals have a default voltage of 200V and are switched to a voltage of -200V (causing the electric fields in the piezoelectric body to reverse in direction) before returning to 200V.

During operation, the processor 200 receives printing data, such as bitmaps, in digital form through interface 204 and processes this data by known means to send a sequence of printing instructions through serial connection 216 to each printhead. These printing instructions may be as detailed as instructions for each printhead as to whether and when to eject a droplet during printing cycles. In one embodiment, the waveform generator generates repeating voltage pulses suitable for application to the electrodes of individual piezoelectric actuators. These are periodic with a time spacing which determines the time between droplet ejection events on the printhead. Alternatively, the voltage amplification, 208, may provide and maintain a single voltage level of multiple voltage levels to the printhead assembly. The ejection transistors within the printhead will switch these voltages according to the CMOS control circuit.

As the waveform generator or generators are not located on the printhead and is used to drive numerous piezoelectric actuators, it or they can generate a significant amount of heat without causing problems. There are not substantial substrate space limitations so it or they may be relatively complex circuits adapted to carefully control the shape of the waveform, with selected, and optionally variable, slew rates, and the power amplifier may be selected to produce the desired voltage up to the maximum possible current requirement in the event that all actuators which may be actuated simultaneously be actuated together.

The control circuit 224 on an individual printhead substrate receives the printing instructions through serial connection 216 and processes these (for example converting from serial to parallel instructions). With reference to the clock signals 214, it is determined whether each individual piezoelectric actuator should be actuated to eject a droplet during each printing cycle and this data is loaded into latches 222. At an appropriate time during each printing cycle, the latched data is passed to the ejection switch circuit which thereby either switch the received printing waveform to the electrodes of the respective actuator element, causing it to carry out a droplet ejection cycle, or to not do so in which case both electrodes of the respective actuator element remain connected to ground and the droplet ejector does not carry out a droplet ejection cycle.

Sensors 232, 234, 236 are monitored during printing. The precise timing of switching the received printing waveform to the electrodes of the respective actuator element can be varied responsive to a measure of temperature using a temperature sensitive CMOS element.

The shift registers move the droplet fire pattern information through to the latch registers. Thus, the shift registers interface with the serial connection, and move all print data to the latch registers in a given print cycle. The latch registers interface with the ejection registers to initiate a print command.

In some embodiments, instead of the machine controller including a waveform generator and the waveform being conducted to the printhead and the CMOS control circuit thereon, the CMOS control circuit actuates the piezoelectric actuators, causing droplet ejection, by switching the voltage applied to one or more of the electrodes of each piezoelectric actuator, for example between ground and a fixed voltage, or between multiple fixed voltage levels, one or more of which may be ground. In this case, the flexible connector 138 contains one or more electrical conductors carrying a fixed voltage from the machine controller to the printhead.

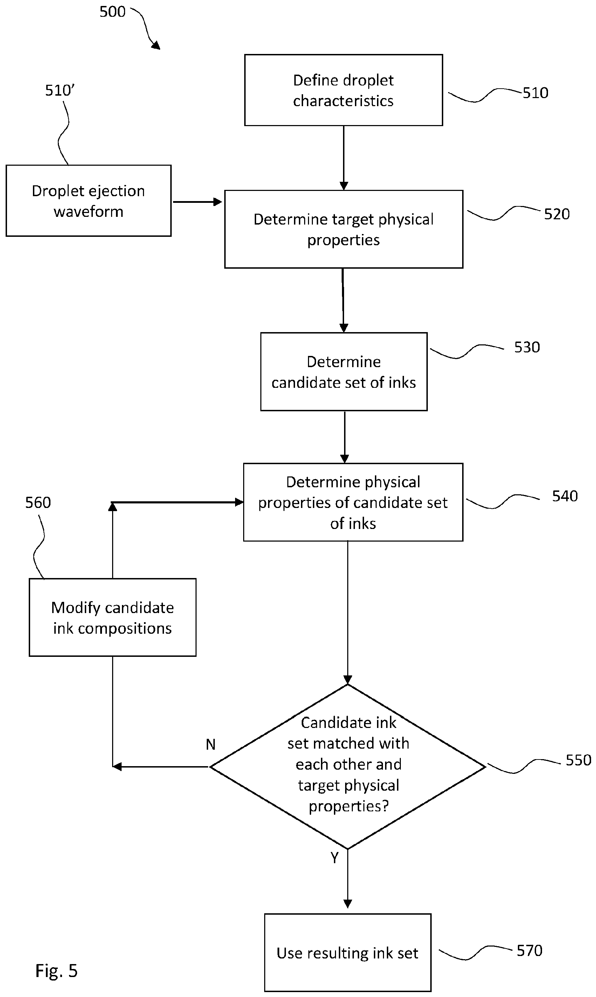

Figure 5 shows a flowchart 500 illustrating a method of matching a plurality of inks for use in the apparatus of Figures 1 through 4. First, the characteristics of the ink droplet (e.g. the size of the ink droplet) are defined 510. The defined characteristics coupled with droplet ejection waveform 510' are used to determine a set of target physical properties of the ink (i.e. viscosity, density and surface tension) 520 (functioning as the physical property criteria). Next, a candidate set of ink compositions (e.g. a candidate set of different ink compositions) can be determined 530. The candidate set can be, for example, a set of inks manufactured with appropriate ingredients at relevant levels, already aiming to achieve the target physical properties. Alternatively, the candidate set can be a random set of inks. After 530, the physical properties (i.e. viscosity, density and surface tension) of the candidate set are determined 540. Typically, those properties can be determined by using the methods described herein, or any suitable and effective methods known to a skilled person. If the properties of the candidate ink set match with each other and match with the target physical properties 550, the candidate set is selected 570. Otherwise, one or more inks (e.g. all the inks) of the candidate set are modified 560 and their physical properties are determined 540 again. The modification can suitably be carried out by adjusting type(s) and/or level(s) of the appropriate ingredients (e.g. surfactants, carriers and rheological modifiers). If after modification, the candidate set still does not meet the matching requirement 550, the set may be modified again 560. In this way, steps 540, 550 and 560 may be suitably repeated one or more times until a set of ink is selected 570. The selected set can be put in use (e.g. be placed in the chambers of the printhead as described herein) and the specification of the set of inks can be used to manufacture corresponding sets of inks which can, where appropriate, be packaged into cartridges. A cartridge may comprise each of the inks in the set.

Detailed Description of an ink set

The present invention will be illustrated by the following non-limiting examples.

The ingredients in Table 1 may be used in the ink compositions.

Table 1: Ingredients

| Ingredient Name | Function |
|---|---|
| D.I. water | Carrier |
| glycerol | Rheological modifier/carrier |
| Carbon black, copper phthalocyanine (CuPc), diarylide yellows (C.I. Pigment Yellow 13), Quinacridone Magenta | Colourant |
| Polyacrylic/Polyacrylate homo/copolymer (e.g. ACRYSOL® RM-5000 and ACRYSOL® RM-825) | Rheological modifier |
| PEG-based surfactant | Surfactant |
| 1,2-benzisothiazol-3(2H)-one; 1,2-benzisothiazolin-3- one | preservative |

An exemplar set of ink compositions is shown in Table 2.

Table 2: A set of Ink compositions

| Ingredients | C1 (wt%) | C2 (wt%) | C3 (wt%) | C4 (wt%) |
|---|---|---|---|---|
| D.I. water | To 100% | To 100% | To 100% | To 100% |

(continued)

| Ingredients | C1 (wt%) | C2 (wt%) | C3 (wt%) | C4 (wt%) |
|---|---|---|---|---|
| glycerol | 5-20% | 5-20% | 5-20% | 5-20% |
| Carbon black | 1-3% | | | |
| CuPc | | 1-3% | | |
| diarylide yellow | | | 1-3% | |
| Quinacridone Magenta | | | | 1-3% |
| PEG-based surfactant | 0.1-5% | 0.1-5% | 0.1-5% | 0.1-5% |
| Polyacrylic/Polyacrylate homo/co-polymer | 0.1-5% | 0.1-5% | 0.1-5% | 0.1-5% |
| 1,2-benzisothiazol-3(2H)-one; 1,2-benzisothiazolin-3-one | 0.001-0.05% | 0.001-0.05% | 0.001-0.05% | 0.001-0.05% |

The weight percentages shown above are based on the total weight of an ink composition. Target viscosity, density and surface tension of each ink composition are determined experimentally or theoretically for a target dpi (e.g. 1200). Narrow ranges (e.g. 1% variation) in viscosity, density and surface tension are determined. These ranges depend very much on the implementation and may be anywhere within a viscosity range of 1.5 mPa·s - 20 mPa·s, a density range of 650 kg/m$^3$-1750 kg/m$^3$, and surface tension range of 20 mN/m - 75 mN/m.

The amount of each ingredient is adjusted in a way that all compositions C1-C4 have a viscosity, density and surface tension within the narrow target ranges. Those values are measured according to the methods described herein. Thus, the values of viscosity, density and surface tension of the compositions C1-C4 are matched in a way that the difference between any two compositions was not more than 1% of the largest corresponding value of the set (i.e. the values were matched in accordance with the present invention). However, because compressibility is not critical, the variation in compressibility between different compositions C1-C4 in the set is allowed to vary and may be greater than 1% or more. The lack of a requirement for close tolerance in compressibility facilitates optimisation of the more important viscosity, density and surface tension parameters.

## Claims

1. A printing apparatus comprising:
   a monolithic inkjet printhead (100a) for ejecting a set of different ink compositions, wherein the printhead (100a) comprises at least one substrate (102) and the substrate (102) comprises a plurality of ejectors (101) each comprising: (i) a nozzle (126), (ii) a chamber (122) for receiving an ink composition of the set, wherein said chamber (122) is in fluid communication with said nozzle (126), and (iii) a piezoelectric actuator (118) coupled to said nozzle (126) for selectively ejecting said ink composition therefrom, wherein each ejector (101) is configured to eject ink droplets of the different ink compositions with corresponding volume and velocity;

   a signal generator configured to generate a driving signal having a repeating waveform;
   a control circuitry (104) configured to relay the driving signal to the actuators (118) through switches (220) and to control the switches (220) to selectively apply the driving signal to individual actuators (118) to thereby eject ink droplets of the different ink compositions with corresponding volume and velocity; and
   the set of different ink compositions received or receivable in the chambers (122),
   **characterised in that** (i) the viscosity values of said compositions are matched in a way that the difference between any two compositions is not more than 5% of the largest viscosity value of the set, (ii) the density values of said compositions are matched in a way that the difference between any two compositions is not more than 5% of the largest density value of the set; and (iii) the surface tension values of said compositions are matched in a way that the difference between any two compositions is not more than 5% of the largest surface tension value of the set.

2. A printing apparatus according to claim 1, wherein each ejector (101) is configured to eject ink compositions which meet a plurality of physical property criteria with corresponding volume and velocity, the physical property criteria including at least corresponding density and viscosity.

3. A printing apparatus according to claim 1 or claim 2, wherein the configuration of the ejector (101) comprises the actuation waveform of the actuator (118) in use, and the actuation waveform typically comprises the time-varying displacement of and the force applied to ink composition in the chamber (122) during actuation.

4. A printing apparatus according to any one preceding claim, wherein the substrate (102) comprises a CMOS control circuit (104), a plurality of layers (112) on the first surface (106) of the substrate (102), the piezoelectric actuator (118) being formed by one or more said layers (112) and the nozzle (126) comprising a hole through the one or more said layers (112), such that the piezoelectric actuator (118) displaces the one or more said layers (112) and the nozzle (126) in use to thereby eject ink composition in an inertial mode.

5. A printing apparatus according to any one preceding claim, comprising at least 100 ejectors (101), preferably at least 1000 ejectors (101).

6. A printing apparatus according to any one preceding claim, wherein: (i) the viscosity values of the set of different ink compositions are matched in a way that the difference between any two compositions is not more than 1% of the largest viscosity value of the set; (ii) the density values of the set of different ink compositions are matched in a way that the difference between any two compositions is not more than 1% of the largest density value of the set; and (iii) the surface tension values of the set of different ink compositions are matched in a way that the difference between any two compositions is not more than 1% of the largest surface tension value of the set.

7. A printing apparatus according to any one preceding claim, wherein the set of different ink compositions comprises a plurality of compositions each comprising a different colourant, selected from cyan (C), yellow (Y), magenta (M), key (K), red (R), green (G), blue (B), violet, orange, gold, silver, white and mixtures thereof, preferably selected from CYMK and mixtures thereof, or selected from RGBK and mixtures thereof, and optionally wherein the difference of weight percentages of the colourants comprised in at least two compositions of the set or any two compositions of the set is not more than 5, or not more than 2, or not more than 1, or not more than 0.1 and any weight percentage is based on the total weight of a respective ink composition.

8. A printing apparatus according to claim 7, wherein the set of different ink compositions comprises a first composition comprising a cyan (C) or red (R) colourant, a second composition comprising a yellow (Y) or green (G) colourant, a third composition comprising a magenta (M) or blue (B) colourant and a fourth composition comprising a key (K) colourant.

9. A printing apparatus according to any one preceding claim, wherein at least one composition of the set of different ink compositions or each composition of the set comprises a rheological modifier, and/or a surfactant, and/or a carrier, and optionally wherein the difference of weight percentages of the rheological modifiers, and/or the surfactants, and/or the carriers comprised in at least two compositions of the set or any two compositions of the set is not more than 20, or not more than 10, or not more than 5, or not more than 1, and any weight percentage is based on the total weight of a respective ink composition.

10. A printing apparatus according to claim 9, wherein at least two compositions of the set of the different ink compositions or any two compositions of the set comprise rheological modifiers different from each other, and/or surfactants different from each other, and/or carriers different from each other, and optionally wherein the difference of weight percentages of the rheological modifiers, and/or the surfactants, and/or the carriers comprised in at least two compositions or any two compositions of the set is at least 0.1, or at least 1, or at least 5, or at least 10, and any weight percentage is based on the total weight of a respective ink composition.

11. A printing apparatus according to any one preceding claim, wherein the difference of compressibility (k) of two ink compositions of the set of different ink compositions, or of any two ink compositions of the set, is at least 1%, or at least 5%, or at least 10%, or at least 20% or at least 30%, or at least 40%, or at least 50% of the largest compressibility value of the set.

12. A method of printing comprising the steps of: (i) providing the printing apparatus according to any one preceding claim; and (ii) operating the control circuitry (104) to eject at least two ink compositions of the set of different ink compositions from at least two of the plurality of nozzles (126) of the plurality of the printhead ejectors (101), whereby ink droplets of the at least two different ink compositions are ejected from the at least two of the plurality of nozzles (126) with corresponding volume and velocity.

13. A method of making a set of different ink compositions for use in the printing apparatus according to any one of claims 1 to 11, comprising the steps of: (i) making at least two ink compositions; (ii) determining whether the viscosity, density and surface tension values of the at least two ink compositions are such that the set of the at least two ink compositions is the set of different ink compositions as described in any one of claims 1 to 11; and (iii) if this is not the case, modifying at least one of the at least two ink compositions one or more times until the set of the at least two ink compositions is the set of different ink compositions as described in any one of claims 1 to 11.

14. A method of selecting a set of different ink compositions for use in the printing apparatus according to any one of claims 1 to 11, comprising the steps of: (i) defining at least one characteristic of an ejected ink droplet; (ii) using the at least one defined characteristic to determine target values of viscosity, density and surface tension of an ink composition; and (iii) selecting at least two ink compositions with reference to the target values as described in steps (ii), wherein the values of the at least two ink compositions are such that the set of the at least two ink compositions is the set of different ink compositions as described in any one of claims 1 to 11.

## Patentansprüche

1. Druckvorrichtung, umfassend:

   einen monolithischen Tintenstrahldruckkopf (100a) zum Ausstoßen einer Reihe unterschiedlicher Tintenzusammensetzungen, wobei der Druckkopf (100a) mindestens ein Substrat (102) umfasst und das Substrat (102) eine Vielzahl von Ausstoßern (101) umfasst, die jeweils umfassen: (i) eine Düse (126), (ii) eine Kammer (122) zum Aufnehmen einer Tintenzusammensetzung des Satzes, wobei die Kammer (122) in Fluidverbindung mit der Düse (126) steht, und (iii) einen piezoelektrischen Aktor (118), der mit der Düse (126) gekoppelt ist, um die Tintenzusammensetzung selektiv daraus auszustoßen, wobei jeder Ausstoßer (101) so konfiguriert ist, dass er Tintentröpfchen der unterschiedlichen Tintenzusammensetzungen mit entsprechendem Volumen und entsprechender Geschwindigkeit ausstößt;
   einen Signalgenerator, der konfiguriert ist, um ein Ansteuersignal mit einer sich wiederholenden Wellenform zu erzeugen;
   eine Steuerschaltlogik (104), die konfiguriert ist, um das Ansteuersignal über Schalter (220) an die Aktoren (118) weiterzuleiten und die Schalter (220) so zu steuern, dass sie das Ansteuersignal selektiv an einzelne Aktoren (118) anlegen, um dadurch Tintentröpfchen der unterschiedlichen Tintenzusammensetzungen mit entsprechendem Volumen und entsprechender Geschwindigkeit auszustoßen; und
   den Satz unterschiedlicher Tintenzusammensetzungen, die in den Kammern (122) aufgenommen sind oder aufgenommen werden können, **dadurch gekennzeichnet, dass** (i) die Viskositätswerte der Zusammensetzungen so abgestimmt sind, dass der Unterschied zwischen zwei beliebigen Zusammensetzungen nicht mehr als 5 % des größten Viskositätswerts des Satzes beträgt; (ii) die Dichtewerte der Zusammensetzungen so abgestimmt sind, dass der Unterschied zwischen zwei beliebigen Zusammensetzungen nicht mehr als 5 % des größten Dichtewerts des Satzes beträgt; und (iii) die Oberflächenspannungswerte der Zusammensetzungen so abgestimmt sind, dass der Unterschied zwischen zwei beliebigen Zusammensetzungen nicht mehr als 5 % des größten Oberflächenspannungswerts des Satzes beträgt.

2. Druckvorrichtung nach Anspruch 1, wobei jeder Ausstoßer (101) so konfiguriert ist, dass er Tintenzusammensetzungen ausstößt, die eine Vielzahl von Kriterien für physische Eigenschaften mit entsprechendem Volumen und entsprechender Geschwindigkeit erfüllen, wobei die Kriterien für physische Eigenschaften mindestens eine entsprechende Dichte und Viskosität enthalten.

3. Druckvorrichtung nach Anspruch 1 oder 2, wobei die Konfiguration des Ausstoßers (101) die Aktorwellenform des Aktors (118) im Gebrauch umfasst und die Aktorwellenform typischerweise die zeitlich variierende Verschiebung und die während der Betätigung auf die Tintenzusammensetzung in der Kammer (122) ausgeübte Kraft umfasst.

4. Druckvorrichtung nach einem der vorstehenden Ansprüche, wobei das Substrat (102) eine CMOS-Steuerschaltung (104), eine Vielzahl von Schichten (112) auf der ersten Oberfläche (106) des Substrats (102), den piezoelektrischen Aktor (118), der durch eine oder mehrere der Schichten (112) gebildet wird, und die Düse (126) ein Loch durch die eine oder mehreren der Schichten (112) umfasst, sodass der piezoelektrische Aktor (118) im Gebrauch die eine oder mehreren der Schichten (112) und die Düse (126) verschiebt, um dadurch die Tintenzusammensetzung in einem Trägheitsmodus auszustoßen.

5. Druckvorrichtung nach einem der vorstehenden Ansprüche, die mindestens 100 Ausstoßer (101), vorzugsweise mindestens 1000 Ausstoßer (101), umfasst.

6. Druckvorrichtung nach einem der vorstehenden Ansprüche, wobei: (i) die Viskositätswerte der verschiedenen Tintenzusammensetzungen so abgestimmt sind, dass der Unterschied zwischen zwei beliebigen Zusammensetzungen nicht mehr als 1 % des größten Viskositätswerts des Satzes beträgt; (ii) die Dichtewerte des Satzes unterschiedlicher Tintenzusammensetzungen so abgestimmt werden, dass der Unterschied zwischen zwei beliebigen Zusammensetzungen nicht mehr als 1 % des größten Dichtewerts des Satzes beträgt; und (iii) die Oberflächenspannungswerte des Satzes der verschiedenen Tintenzusammensetzungen so abgestimmt sind, dass der Unterschied zwischen zwei beliebigen Zusammensetzungen nicht mehr als 1 % des größten Oberflächenspannungswerts des Satzes beträgt.

7. Druckvorrichtung nach einem der vorstehenden Ansprüche, wobei der Satz unterschiedlicher Tintenzusammensetzungen eine Vielzahl von Zusammensetzungen umfasst, die jeweils einen anderen Farbstoff umfassen, ausgewählt aus Cyan (C), Gelb (Y), Magenta (M), Schwarz (K, Black), Rot (R), Grün (G), Blau (B), Violett, Orange, Gold, Silber, Weiß und Mischungen davon, vorzugsweise ausgewählt aus CYMK und Mischungen davon oder ausgewählt aus RGBK und Mischungen davon, und wobei wahlweise der Unterschied der Gewichtsprozentsätze der Farbstoffe, die in mindestens zwei Zusammensetzungen des Satzes oder in zwei beliebigen Zusammensetzungen des Satzes enthalten sind, nicht mehr als 5 oder nicht mehr als 2 oder nicht mehr als 1 oder nicht mehr als 0,1 beträgt und jeder Gewichtsprozentsatz auf dem Gesamtgewicht einer jeweiligen Tintenzusammensetzung basiert.

8. Druckvorrichtung nach Anspruch 7, wobei der Satz unterschiedlicher Tintenzusammensetzungen eine erste Zusammensetzung mit einem Cyan- (C) oder Rot- (R) Farbstoff, eine zweite Zusammensetzung mit einem Gelb- (Y) oder Grün- (G) Farbstoff, eine dritte Zusammensetzung mit einem Magenta- (M) oder Blau- (B) Farbstoff und eine vierte Zusammensetzung mit einem Schwarz- (K) Farbstoff umfasst.

9. Druckvorrichtung nach einem der vorstehenden Ansprüche, wobei mindestens eine Zusammensetzung des Satzes aus unterschiedlichen Tintenzusammensetzungen oder jede Zusammensetzung des Satzes einen Rheologiemodifikator und/oder ein Tensid und/oder einen Träger umfasst, und wobei optional der Unterschied der Gewichtsprozentsätze der Rheologiemodifikatoren und/oder der Tenside und/oder der Träger, die in mindestens zwei Zusammensetzungen des Satzes oder zwei beliebigen Zusammensetzungen des Satzes umfasst sind, nicht mehr als 20 oder nicht mehr als 10 oder nicht mehr als 5 oder nicht mehr als 1 beträgt, und jeder Gewichtsprozentsatz auf dem Gesamtgewicht einer jeweiligen Tintenzusammensetzung basiert.

10. Druckvorrichtung nach Anspruch 9, wobei mindestens zwei Zusammensetzungen des Satzes aus den unterschiedlichen Tintenzusammensetzungen oder zwei beliebige Zusammensetzungen des Satzes voneinander verschiedene Rheologiemodifikatoren und/oder voneinander verschiedene Tenside und/oder voneinander verschiedene Träger umfassen, und wobei wahlweise der Unterschied der Gewichtsprozentsätze der Rheologiemodifikatoren und/oder der Tenside und/oder der Träger, die in mindestens zwei Zusammensetzungen oder zwei beliebigen Zusammensetzungen des Satzes umfasst sind, mindestens 0,1 oder mindestens 1 oder mindestens 5 oder mindestens 10 beträgt, und jeder Gewichtsprozentsatz auf dem Gesamtgewicht einer jeweiligen Tintenzusammensetzung basiert.

11. Druckvorrichtung nach einem der vorstehenden Ansprüche, wobei der Unterschied der Kompressibilität (k) zweier Tintenzusammensetzungen des Satzes unterschiedlicher Tintenzusammensetzungen oder zweier beliebiger Tintenzusammensetzungen des Satzes mindestens 1 % oder mindestens 5 % oder mindestens 10 % oder mindestens 20 % oder mindestens 30 % oder mindestens 40 % oder mindestens 50 % des größten Kompressibilitätswerts des Satzes beträgt.

12. Druckverfahren, umfassend die Schritte: (i) Bereitstellen der Druckvorrichtung nach einem der vorstehenden Ansprüche; und (ii) Betreiben der Steuerschaltlogik (104), um mindestens zwei Tintenzusammensetzungen des Satzes unterschiedlicher Tintenzusammensetzungen aus mindestens zwei der Vielzahl von Düsen (126) der Vielzahl von Druckkopfausstoßern (101) auszustoßen, wobei Tintentröpfchen der mindestens zwei unterschiedlichen Tintenzusammensetzungen mit entsprechendem Volumen und entsprechender Geschwindigkeit aus den mindestens zwei der Vielzahl von Düsen (126) ausgestoßen werden.

13. Verfahren zum Herstellen eines Satzes unterschiedlicher Tintenzusammensetzungen zur Verwendung in der Druckvorrichtung nach einem der Ansprüche 1 bis 11, umfassend die Schritte: (i) Herstellen von mindestens zwei Tintenzusammensetzungen; (ii) Bestimmen, ob die Viskositäts-, Dichte- und Oberflächenspannungswerte der mindestens zwei Tintenzusammensetzungen so sind, dass der Satz der mindestens zwei Tintenzusammensetzungen der Satz unterschiedlicher Tintenzusammensetzungen ist, wie in einem der Ansprüche 1 bis 11 beschrieben; und (iii) wenn dies nicht der Fall ist, ein- oder mehrmaliges Modifizieren mindestens einer der mindestens zwei Tintenzusammensetzungen, bis der Satz der mindestens zwei Tintenzusammensetzungen der Satz unterschiedlicher Tintenzusammensetzungen ist, wie in einem der Ansprüche 1 bis 11 beschrieben.

14. Verfahren zum Auswählen eines Satzes unterschiedlicher Tintenzusammensetzungen zur Verwendung in der Druckvorrichtung nach einem der Ansprüche 1 bis 11, umfassend die Schritte: (i) Definieren mindestens einer Eigenschaft eines ausgestoßenen Tintentröpfchens; (ii) Verwenden der mindestens einen definierten Eigenschaft zum Bestimmen von Zielwerten für Viskosität, Dichte und Oberflächenspannung einer Tintenzusammensetzung; und (iii) Auswählen von mindestens zwei Tintenzusammensetzungen unter Bezugnahme auf die Zielwerte, wie in Schritt (ii) beschrieben, wobei die Werte der mindestens zwei Tintenzusammensetzungen so sind, dass der Satz der mindestens zwei Tintenzusammensetzungen der Satz verschiedener Tintenzusammensetzungen ist, wie in einem der Ansprüche 1 bis 11 beschrieben.

**Revendications**

1. Appareil d'impression comprenant :

   une tête d'impression à jet d'encre monolithique (100a) permettant d'éjecter un ensemble de compositions d'encre différentes, dans lequel la tête d'impression (100a) comprend au moins un substrat (102) et le substrat (102) comprend une pluralité d'éjecteurs (101) comprenant chacun : (i) une buse (126), (ii) une chambre (122) permettant de recevoir une composition d'encre de l'ensemble, dans lequel ladite chambre (122) est en communication fluidique avec ladite buse (126), et (iii) un actionneur piézoélectrique (118) couplé à ladite buse (126) permettant d'éjecter sélectivement ladite composition d'encre de celle-ci, dans lequel chaque éjecteur (101) est configuré pour éjecter des gouttelettes d'encre des différentes compositions d'encre avec un volume et une vitesse correspondants ;
   un générateur de signal configuré pour générer un signal d'entraînement ayant une forme d'onde répétitive ;
   un ensemble de circuits de commande (104) configuré pour relayer le signal d'entraînement aux actionneurs (118) par l'intermédiaire de commutateurs (220) et pour commander les commutateurs (220) afin d'appliquer sélectivement le signal d'entraînement à des actionneurs individuels (118) pour éjecter ainsi des gouttelettes d'encre des différentes compositions d'encre avec un volume et une vitesse correspondants ; et
   l'ensemble de différentes compositions d'encre reçues ou recevables dans les chambres (122), **caractérisé en ce que** (i) les valeurs de viscosité desdites compositions sont adaptées de manière à ce que la différence entre deux compositions quelconques ne soit pas supérieure à 5 % de la plus grande valeur de viscosité de l'ensemble, (ii) les valeurs de densité desdites compositions sont adaptées de manière à ce que la différence entre deux compositions quelconques ne soit pas supérieure à 5 % de la plus grande valeur de densité de l'ensemble ; et (iii) les valeurs de tension de surface desdites compositions sont adaptées de telle manière à ce que la différence entre deux compositions quelconques ne soit pas supérieure à 5 % de la plus grande valeur de tension de surface de l'ensemble.

2. Appareil d'impression selon la revendication 1, dans lequel chaque éjecteur (101) est configuré pour éjecter des compositions d'encre qui répondent à une pluralité de critères de propriétés physiques avec un volume et une vitesse correspondants, les critères de propriétés physiques comportant au moins une densité et une viscosité correspondantes.

3. Appareil d'impression selon la revendication 1 ou la revendication 2, dans lequel la configuration de l'éjecteur (101) comprend la forme d'onde d'actionnement de l'actionneur (118) en cours d'utilisation, et la forme d'onde d'actionnement comprend typiquement le déplacement variable dans le temps de la composition d'encre dans la chambre (122) et la force appliquée à celle-ci pendant l'actionnement.

4. Appareil d'impression selon l'une quelconque revendication précédente, dans lequel le substrat (102) comprend un circuit de commande CMOS (104), une pluralité de couches (112) sur la première surface (106) du substrat (102), l'actionneur piézoélectrique (118) étant formé par une ou plusieurs desdites couches (112) et la buse (126) comprenant un trou à travers ladite ou lesdites couches (112), de telle sorte que l'actionneur piézoélectrique (118) déplace ladite ou lesdites couches (112) et la buse (126) en cours d'utilisation pour éjecter ainsi la composition d'encre dans un mode inertiel.

**5.** Appareil d'impression selon l'une quelconque revendication précédente, comprenant au moins 100 éjecteurs (101), de préférence au moins 1000 éjecteurs (101).

**6.** Appareil d'impression selon l'une quelconque revendication précédente, dans lequel : (i) les valeurs de viscosité de l'ensemble de différentes compositions d'encre sont adaptées de manière à ce que la différence entre deux compositions quelconques ne soit pas supérieure à 1 % de la plus grande valeur de viscosité de l'ensemble ; (ii) les valeurs de densité de l'ensemble de différentes compositions d'encre sont adaptées de manière à ce que la différence entre deux compositions quelconques ne soit pas supérieure à 1 % de la plus grande valeur de densité de l'ensemble ; et (iii) les valeurs de tension de surface de l'ensemble de différentes compositions d'encre sont adaptées de manière à ce que la différence entre deux compositions quelconques ne soit pas supérieure à 1 % de la plus grande valeur de tension de surface de l'ensemble.

**7.** Appareil d'impression selon l'une quelconque des revendications précédentes, dans lequel l'ensemble de différentes compositions d'encre comprend une pluralité de compositions comprenant chacune un colorant différent, choisi parmi cyan (C), jaune (J), magenta (M), noir (N), rouge (R), vert (V), bleu (B), violet, orange, or, argent, blanc et mélanges de ceux-ci, de préférence choisis parmi **CMJN** et mélanges de ceux-ci, ou choisis parmi **RVBN et** mélanges de ceux-ci, et facultativement dans lequel la différence de pourcentages en poids des colorants compris dans au moins deux compositions de l'ensemble ou dans deux compositions quelconques de l'ensemble n'est pas supérieure à 5, ou non supérieure à 2, ou non supérieure à 1, ou non supérieure à 0,1, et tout pourcentage en poids est basé sur le poids total d'une composition d'encre respective.

**8.** Appareil d'impression selon la revendication 7, dans lequel l'ensemble de différentes compositions d'encre comprend une première composition comprenant un colorant cyan (C) ou rouge (R), une deuxième composition comprenant un colorant jaune (J) ou vert (V), une troisième composition comprenant un colorant magenta (M) ou bleu (B) et une quatrième composition comprenant un colorant noir (N).

**9.** Appareil d'impression selon l'une quelconque revendication précédente, dans lequel au moins une composition de l'ensemble de différentes compositions d'encres ou chaque composition de l'ensemble comprend un modificateur de rhéologie, et/ou un agent tensioactif, et/ou un véhicule, et facultativement dans lequel la différence de pourcentages de poids des modificateurs de rhéologie, et/ou des agents tensioactifs, et/ou des véhicules compris dans au moins deux compositions de l'ensemble ou dans deux compositions quelconques de l'ensemble n'est pas supérieure à 20, ou non supérieure à 10, ou non supérieure à 5, ou non supérieure à 1, et tout pourcentage de poids est basé sur le poids total d'une composition d'encre respective.

**10.** Appareil d'impression selon la revendication 9, dans lequel au moins deux compositions de l'ensemble des différentes compositions d'encre ou deux compositions quelconques de l'ensemble comprennent des modificateurs de rhéologie différents les uns des autres, et/ou des agents tensioactifs différents les uns des autres, et/ou des véhicules différents les uns des autres, et facultativement dans lequel la différence de pourcentages de poids des modificateurs de rhéologie, et/ou des agents tensioactifs, et/ou des véhicules compris dans au moins deux compositions ou dans deux compositions quelconques de l'ensemble est d'au moins 0,1, ou au moins 1, ou au moins 5, ou au moins 10, et tout pourcentage de poids est basé sur le poids total d'une composition d'encre respective.

**11.** Appareil d'impression selon l'une quelconque revendication précédente, dans lequel la différence de compressibilité (k) de deux compositions d'encre de l'ensemble de compositions d'encre différentes, ou de deux compositions d'encre quelconques de l'ensemble, est d'au moins 1 %, ou au moins 5 %, ou au moins 10 %, ou au moins 20 %, ou au moins 30 %, ou au moins 40 %, ou au moins 50 % de la plus grande valeur de compressibilité la plus élevée de l'ensemble.

**12.** Procédé d'impression comprenant les étapes consistant à : (i) fournir l'appareil d'impression selon l'une quelconque revendication précédente ; et (ii) faire fonctionner l'ensemble de circuits de commande (104) afin d'éjecter au moins deux compositions d'encre de l'ensemble de différentes compositions d'encre à partir d'au moins deux de la pluralité de buses (126) de la pluralité d'éjecteurs de têtes d'impression (101), moyennant quoi des gouttelettes d'encre des au moins deux compositions d'encre différentes sont éjectées à partir des au moins deux buses de la pluralité de buses (126) avec un volume et une vitesse correspondants.

**13.** Procédé de fabrication d'un ensemble de différentes compositions d'encre pour utilisation dans l'appareil d'impression selon l'une quelconque des revendications 1 à 11, comprenant les étapes consistant à : (i) fabriquer au moins deux compositions d'encre ; (ii) déterminer si les valeurs de viscosité, de densité et de tension de surface des au moins deux compositions d'encre sont telles que l'ensemble des au moins deux compositions d'encre est l'ensemble de différentes compositions d'encre tel que décrit dans l'une quelconque des revendications 1 à 11 ; et (iii) si tel n'est pas le cas, modifier au moins l'une des au moins deux compositions d'encre une ou plusieurs fois jusqu'à ce que l'ensemble des au moins deux compositions d'encre soit l'ensemble de différentes compositions d'encre tel que décrit dans l'une quelconque des revendications 1 à 11.

14. Procédé de sélection d'un ensemble de différentes compositions d'encre pour utilisation dans l'appareil d'impression selon l'une quelconque des revendications 1 à 11, comprenant les étapes consistant à : (i) définir au moins une caractéristique d'une gouttelette d'encre éjectée ; (ii) utiliser l'au moins une caractéristique définie afin de déterminer des valeurs cibles de viscosité, de densité et de tension de surface d'une composition d'encre ; et (iii) sélectionner au moins deux compositions d'encre en référence aux valeurs cibles décrites à l'étape (ii), dans lequel les valeurs des au moins deux compositions d'encre sont telles que l'ensemble des au moins deux compositions d'encre est l'ensemble de différentes compositions d'encre tel que décrit dans l'une quelconque des revendications 1 à 11.

Fig. 1

Fig. 2

EP 4 292 822 B1

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110134175 A1
- US 6328395 B1
- US 6364444 B1
- WO 2021229040 A1
- US 20190283424 A1
- US 2011227988 A1
- US 8322814 B2
- US 10589519 B2
- US 7855037 B2